# EUROPEAN PATENT SPECIFICATION

(11) **EP 1 519 828 B1**
(45) Date of publication and mention of the grant of the patent: **07.10.2015**
(21) Application number: 03740291.4
(22) Date of filing: 19.06.2003
(51) Int. Cl.: B29C 59/00, B65D 75/58

(54) **APPARATUS FOR PRODUCING SCORED LINES IN A FILM, A METHOD FOR ITS PRODUCTION AND THE RESULTING FILM**
VORRICHTUNG ZUR ERZEUGUNG VON SCHNITTEN ALS SCHWÄCHUNGSLINIEN FÜR FOLIENVERPACKUNG, VERFAHREN ZU SEINER HERSTELLUNG UND DER RESULTIERENDE FILM
APPAREIL DE FORMATION DE RAINURES DANS UN FILM, SON PROCEDE DE PRODUCTION ET LE FILM RESULTANT

(30) Priority: 19.06.2002 EP 02291535; 15.01.2003 US 342603
(43) Date of publication of application: 06.04.2005
(73) Proprietor: MARS, INCORPORATED, McLean, Virginia 22101-3883 (US)
(72) Inventor: BOUTRON, Joël, F-18410 Argent/sauldre (FR); BLANCHARD, Daniel, F-45510 Neuvy-en-Sullias (FR)
(74) Representative: Hirsch & Associés
(86) International application number: PCT/EP2003/006492
(87) International publication number: WO 2004/000532

(56) References cited:
- EP-A- 1 177 878
- US-A- 3 909 582
- US-A- 4 539 793
- US-A- 5 202 065
- US-A- 5 403 525
- US-A- 6 120 629

## Description

The present invention relates to a device for producing at least one scored line in at least one plastic outer layer of a film. The invention also relates to a method for producing at least one scored line in just a first plastic layer of a film comprising at least a second layer. The invention also relates to a method of manufacturing a packaging. The invention also relates to a film and a packaging having a scored line.

The invention has a particularly advantageous application in the production of pouches or bags containing foodstuffs, especially animal foodstuffs, such pouches or bags being designed to be hermetically sealed by welding and heat-treated after they have been filled and closed.

Currently, such packagings have various shapes. They may be flat with three or fours welds, or gusset-shaped with three welded sides or three welded sides and a welded bottom in the shape of a gusset. Such packagings may also comprise two side gussets or two gussets. positioned at the top and bottom of the packaging with welded side edges.

These packagings can be sterilized by being heated in a moist atmosphere under pressure. To withstand such a heat treatment, they are produced from one or more film(s) having a particular structure.

More particularly, they are generally manufactured from one or more film(s), each film comprising an upper layer and a lower layer designed to form the outer and inner faces of the said packagings, made of plastic, and a central layer sandwiched between the said upper and lower layers, the central layer being made from a light metal. In general, the upper layer is a layer of polyethylene terephthalate which may or may not be combined with a polyamide layer. The central layer is made from aluminium and the lower layer is a polypropylene layer which may or may not be combined with a polyamide layer. Between each layer, an adhesive coating is provided which makes it possible to bond the various layers together, for example, by lamination.

Furthermore, the polyethylene terephthalate layer can be printed on its inner face and/or its outer face. Thus, the polyethylene terephthalate layer generally acts as a printing medium and gives the packaging its external appearance.

The central aluminium layer forms a barrier to gas, especially to oxygen and steam, in order to isolate the substances contained inside the packaging from the outside. This central layer is weak because of its low thickness; it is protected by the lower and upper layers.

The polyamide layer forms an anti-perforation layer when this is required depending on the subsequent applications of the packaging, and the polypropylene layer acts as a welding agent for making the packaging, gives the overall mechanical strength of the packaging and seals the welds of the said packaging.

Such packagings may in particular contain moist solids, liquids or else a combination of solids and liquids.

Some packagings may comprise a tear-initiating notch on their side edges. This notch is therefore made in a side weld of the packaging and makes it possible to open the latter by tearing.

These packagings, which are already known, have certain drawbacks, especially connected with their method of opening.

This is because resorting to a cutting tool such as a pair of scissors or knife lacks practicality, it being possible, for example, for this tool to be soiled by the product contained inside the packaging.

When the packaging can be opened by a tear initiated using a tear-initiating notch, the tear force has to be relatively high and sometimes requires use of a tool.

In fact, the tear force of a multilayer film generally depends on the tear force of the materials forming the packaging and on the adhesive force between the various layers forming the said packaging, forces which can be altered after preservation treatment thereof.

The tear direction is generally propagated in the walls of the packaging in an undirected manner. Thus, either partial opening of the packaging or a tear below the level of the product contained in the packaging is then obtained, which causes an undesired spill of this product.

To try to alleviate the aforementioned drawbacks, mainly linked to the opening of these packagings, packagings which have laser produced scoring on the outer faces of their walls have already been proposed. Such packagings are especially described in documents EP-A-540 184 and EP-A-473 517. However, the main drawback of this scoring carried out by applying a laser beam to the outer face of the packaging walls is that of impairing the external appearance of the packaging once said scoring has been carried out.

Document US-A-5 000 321 also discloses a packaging which comprises on its outer and inner faces weakened zones made by means of a laser beam. These weakened zones are obtained by thinning of the layers forming the outer and inner faces of the said packaging.

Furthermore, document EP-A-954 474 proposes a packaging with a scored line in the form of laser-produced perforation or perforations of the plastic inner layer or layers. The perforations extend to the layer made of aluminium or other light-metal without cutting into it, this layer reflecting the laser beam during the operation of perforating the plastic inner layers with the laser.

Although the technology proposed by this document is satisfactory, nevertheless it is dependent on the presence of the metal film.

More generally, technologies using lasers have a high investment cost, and also a high operational cost associated with the maintenance of the laser tools and the limited production rate of these technologies. Furthermore, their implementation in the absence of a metal interlayer is very awkward.

The aim of the present invention is to provide an alternative technology to those known in the prior art in order to produce scored lines in flexible packagings, giving a directed and clean opening of the packaging.

The invention especially aims to provide an alternative technology having a lower financial investment, which is more economical to operate, especially by allowing a higher production rate in comparison with the technologies using lasers.

The invention further aims to provide a technology capable of producing scored lines in the plastic inner layers of the film forming the flexible packaging even in the case where the film has no metal layer, while being simple to implement.

In relation with these aims, it is already known from US-A-5 202 065 an ultrasonic method for producing a score in a thermoplastic film by applying ultrasonic energy through a tip according to the preamble of claim 1. It is also known from US-A- 4 539 793 a method for forming a burstable pouch comprising two sheets of laminated film. Further to permanent seals made along edges of the layers, one breakable seal is made along one edge between RF welding electrodes by applying a RF welding field.

The invention relates above all, but not only, to flexible packagings, especially in the form of pouches, designed to undergo a preservation treatment such as those pouches intended to contain liquid or moist solid foodstuffs, in particular moist animal foodstuffs.

To this end, the present invention provides a device for producing at least one scored line in at least one plastic material outer layer of a film, comprising:
- a bearing surface for the film; and
- at least one projection for forming the scored line by penetration of the projection into the said plastic material layer when the film is in position against the said bearing surface, the projection causing the plastic material of the said layer to flow along the scored line in order to form a bead on the said layer along at least one side of the scored line wherein the projection causes:
   - the plastic material of the said layer to flow along the scored line in order to form a bead on the said layer along each side of the scored line, the projection causing more plastic material to be flowed along one side of the scored line than along the other side of the scored line, or
   - the formation of a bead on the surface of the said plastic material layer along just one side of the scored line.

The scored line thus produced may be in the form of a continuous or discontinuous groove. The term "discontinuous groove" refers to a series of grooves or blind holes.

If required, the scored line may be produced in the form of successive perforations.

The projection is preferably arranged on a support, the scored line being formed by relative travel of the film with respect to the support.

The projection may be capable of incizing the plastic material layer.

The projection may cause the formation of a bead on the surface of the said plastic material layer along each side of the scored line, one of the said beads being higher than the other of the said beads. It is preferred that one of the said beads is at least 30%, preferably at least 50%, more advantageously at least 100%, higher than the other of the said beads.

Alternatively, the projection may cause the formation of a bead on the surface of the said plastic material layer along each side of the scored line, wherein the cross-sectional area of one of the said beads is greater than the cross-sectional area of the other of the said beads said cross-sectional areas being considered perpendicular to the scored line. It is preferred that said cross-sectional area of one of the said beads is at least 30%, preferably at least 50%, more advantageously at least 100%, greater than said cross-sectional area of the other of the said beads.

Alternatively, the projection causes the formation of a bead on the surface of the said plastic layer along each side of the scored line, one of the said beads providing a higher mechanical resistance to the said plastic layer with respect to the other of the said beads.

Of course, if the scored line is of discontinuous type, the bead may also be discontinuous.

The projection may especially have an asymmetrical cross section.

Preferably, the projection causes the plastic to flow in cooperation with ultrasound. For this, the device may comprise an anvil and a sonotrode for applying ultrasound vibrations to the film when the film is compressed between the sonotrode and the anvil, the projection being arranged on the said anvil. The bearing surface is preferably arranged on the anvil.

Advantageously, the anvil is a wheel mounted so as to rotate, the projection forming a rib arranged on the circumference of the wheel, the rib not extending according to the axial direction of the wheel.

Alternately, the projection may have a straight elongate shape in the run direction of the film, the width and/or the height of the projection preferably increasing in the run direction of the film. Furthermore, the projection may have a cross section with a flat apex parallel to the bearing surface.

The said support may be a roller mounted so as to rotate, the projection being arranged on the circumference of the roller. In this case, the projection may be arranged on the circumference of a ring, the said ring being mounted on the roller. There may be a clearance between the ring and the roller taken at ambient temperature, a heating element making it possible to clamp the ring on the roller by expansion. Moreover, the bearing surface may be defined by the circumference of a second roller, the axis of which is parallel to the first roller. The first roller may have running tracks tensioned against the second roller.

According to another aspect, the invention provides a method for producing at least one scored line in just a first plastic layer of a film comprising at least a second layer, the method comprising the production of the scored line in the first layer of the film using a device according to the invention. It will be understood that the first layer may possibly be defined by several sublayers of plastic materials which may be different, for example polypropylene and polyamide. Preferably, the film is running with respect to the device for producing the scored line.

According to a preferred embodiment, the said scored line is made after assembling the first and second layers of the film.

According to another preferred embodiment, the said scored line is made before assembling the first and second layers of the film.

According to yet another aspect, the invention provides a method of manufacturing a packaging, which may especially be designed to undergo a preservation treatment, from at least one film having a first plastic layer and at least a second layer, the said second layer forming the outer face of the packaging, which method comprises:
- producing at least one scored line just in the said first layer of the film according to the aforementioned method of the invention, then
- making the packaging from the film provided with the said scored line.

Here again, it will be understood that the first layer may possibly be defined by several sublayers of plastic materials which may be different, for example polypropylene and polyamide.

According to yet another aspect, the invention provides a film comprising at least one plastic layer having a scored line, the said plastic layer forming a bead on its surface along:
- a single side of the scored line, or
- on each side of the scored line, one of the said beads being higher than the other of the said beads.

When the said plastic material layer forms a bead on its surface along each side of the scored line, it is preferred that one of the said beads is at least 30%, preferably at least 50%, more advantageously at least 100%, higher than the other of the said beads.

The invention also provides a film comprising at least one plastic material layer having a scored line, the said plastic material layer forming a bead on its surface along each side of the scored line, the cross-sectional area of one of the said beads being greater than the cross-sectional area of the other of the said beads. It is preferred that said cross-sectional area of one of the said beads is at least 30%, preferably at least 50%, more advantageously at least 100%, greater than said cross-sectional area of the other of the said beads.

The invention further provides a film comprising at least one plastic material layer having a scored line, the said plastic material layer forming a bead on its surface along each side of the scored line, one of the said beads providing a higher mechanical resistance to the said plastic material layer with respect to the other of the said beads.

Of course, for each of these films, if the scored line is of discontinuous type, the bead of these films may also be discontinuous.

According to a preferred embodiment, the invention provides a film comprising at least one plastic layer in which is made:
- a groove forming a scored line, or possibly
- a series of perforations where the film comprises at least one other layer,
the groove or the perforations being produced without removing material from the said layer.

The groove may be of continuous or discontinuous type.

According to yet another aspect, the invention relates to a packaging, which may especially be designed to undergo a preservation treatment in particular after it has been filled and closed, comprising at least one flexible wall, the said flexible wall comprising a plastic layer in which a groove forming a scored line is made, the said plastic layer forming a bead on its surface along:
- a single side of the scored line, or
- on each side of the scored line, one of the said beads being higher than the other of the said beads.

When the said plastic material layer forms a bead on its surface along each side of the scored line, it is preferred that one of the said beads is at least 30%, preferably at least 50%, more advantageously at least 100%, higher than the other of the said beads.

The bead may be made from material which has plastically flowed out of the groove made in the said layer.

Advantageously, a second groove forming a second scored line is made in the said layer, the second groove extending at some distance along the first groove, in which the single bead or the highest bead of each of the grooves is arranged along the groove on the side away from the other groove, the two scored lines preferably being separated by 2 to 5 millimetres and the two lines preferably also being parallel.

The invention also provides a packaging, which may especially be designed to undergo a preservation treatment in particular after it has been filled and closed, comprising at least one flexible wall, the said flexible wall comprising a plastic material layer in which a groove forming a scored line is made, the said plastic material layer forming a bead on its surface along each side of the scored line, wherein the cross-sectional area of one of the said beads is greater than the cross-sectional area of the other of the said beads. It is preferred that said cross-sectional area of one of the said beads is at least 30%, preferably at least 50%, more advantageously at least 100%, greater than said cross-sectional area of the other of the said beads.

The bead may be made from material which has plastically flowed out of the groove made in the said layer

Advantageously, a second groove forming a second scored line is made in the said layer, the second groove extending at some distance along the first groove, in which the bead of each of the grooves having the greatest of said cross-sectional areas is arranged along the groove on the side away from the other groove, the two scored lines preferably being separated by 2 to 5 millimetres and the two lines preferably also being parallel.

For the various packagings according to the invention, if the scored line is of discontinuous type, the bead(s) may also be discontinuous.

For the various packagings according to the invention, it is advantageous that the scored line is made in the face of the wall towards the inside of the packaging. Moreover, the wall may comprise a layer made of a light metal such as aluminium. The said plastic layer is preferably made of polypropylene. Moreover, the packaging may comprise a second flexible wall, the first and the second wall being joined by their side edges and preferably comprising welds on the side edges.

When opening the packaging according to the invention, the tear is propagated along the scored line thus produced. A directed and clean opening of the packaging is thus provided.

Within the scope of the present invention, the term "preservation treatment" refers to any treatment known to a person skilled in the art, in particular heat treatments such as conventional sterilization, flash sterilization and pasteurization.

Other characteristics and advantages of the invention will become apparent on reading the following description of preferred embodiments of the invention, given by way of example and with reference to the appended drawing.
Figure 1 is a detailed view of part of a film from which a packaging according to the invention can be made.
Figure 2 is a perspective view of a device according to the invention for producing scored lines in a film.
Figure 3 is a front view of the device of Figure 2, its scoring roller being seen in longitudinal section.
Figure 4 is a top view of the scoring roller of the device of Figure 2.
Figure 5 is a longitudinal section of the scoring ring intended to be mounted on the scoring roller of the device of Figure 2.
Figure 6 is a schematic longitudinal section taken locally at one of the ribs of the scoring roller of the device of Figure 2 when the film is present.
Figure 7 illustrates schematically the path of the film passing through the device of Figure 2.
Figure 8 is a schematic longitudinal section taken locally at one of the ribs of the scoring roller of the device of Figure 2 according to a variant.
Figure 9 is a diagram illustrating an improvement of Figure 3.
Figure 10 is a schematic perspective view of another device according to the invention for producing scored lines in a film.
Figure 11 is a perspective view of a scoring wheel of the device of Figure 10.
Figure 12a is an axial section of the scoring wheel of Figure 10, limited to the region of the circumferential ribs.
Figure 12b is an axial section showing the film placed between the scoring wheel and the sonotrode, Figure 12c showing a local enlargement of the rib forming the scoring.
Figures 13a and 13b respectively show a perspective view of a portion of the circumference of the scoring wheel and a radial section of the scoring wheel at a rib, in the case where the ribs of the scoring wheel are made in the form of teeth in order to form discontinuous grooves in the film.
Figures 14a and 14b respectively show a perspective view of a portion of the circumference of the scoring wheel and a radial section of the scoring wheel at a rib, in the case where the ribs of the scoring wheel are continuous in order to form continuous grooves in the film.
Figure 15 is a schematic perspective view of a variant of the device of Figure 10.
Figures 16 and 17 are perspective views of a shoe of the device of Figure 15, Figure 16 showing an enlargement thereof.
Figures 18a to 18c each show a cross section of the shoe of Figure 17 taken at three different locations over the length of the shoe.
Figure 19 shows a vertical section of the device along a rib of the shoe.
Figure 20 shows a section of the device along the line of section A-A defined in Figure 19, Figure 21 showing a local enlargement of a rib of the shoe.
Figures 22a and 22b are front and sectional side views respectively of a packaging of the flat bag type.
Figures 23a and 23b are front and sectional side views respectively of another packaging of the flat bag type.
Figures 24a and 24b show front and sectional side views respectively of a packaging of the bag type with a gusset.
Figures 25a, 25b and 25c show another packaging of the bag type with a gusset, respectively seen from the front; in section from the side and seen in three-quarters perspective.
Figures 26a, 26b and 26c show a packaging of the bag type with two side gussets seen from the front, in section along the plane A-A and in schematic three-quarters perspective view, respectively.
Figure 27a is a three-quarters perspective view of one embodiment of a packaging according to the invention, in the closed state.
Figure 27b is a three-quarters perspective view of the packaging of Figure 8a, in the half-open state.
Figure 28a is a detailed view of a welded edge of the packaging of Figure 8a.
Figure 28b is a detailed view of a welded edge of a variant embodiment of the packaging according to the invention.
Figure 29 is a schematic view of a device for implementing the method according to the invention.
Figure 30 is a schematic view of another device for implementing the method according to the invention.

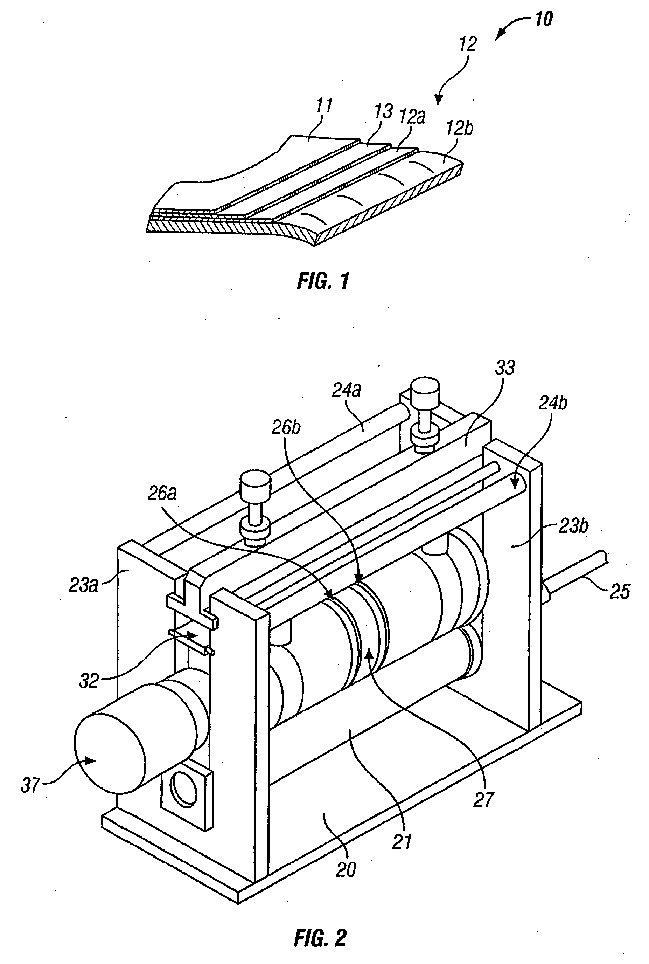

Figure 1 illustrates a film structure typically used for manufacturing packagings, especially in the form of pouches, intended to contain foodstuffs especially for animals. For this reason, they must conventionally withstand sterilization in a moist atmosphere and under pressure.

As can be seen in this figure, this film 10 comprises three layers 11, 12, 13, that is an upper layer 11 and a lower layer 12 made of plastic and a central layer 13 made of a light metal sandwiched between the said upper 11 and lower 12 layers. The upper layer 11 forms the outer face of the packagings, while the lower layer 12 forms their inner face.

The lower layer 12 may in fact comprise one or more successive layers of plastics which may differ from each other, each one being able to fulfil a specific function. The same applies for the upper layer 11.

In the example illustrated in Figure 1, the upper layer 11 forming the outer face of the packaging is made of polyethylene terephthalate, the central layer 13 is made of aluminium and the lower layer 12 forming the inner face of the packaging comprises successively a layer 12a of polyamide - preferably oriented polyamide - and a layer 12b of polypropylene.

The polyethylene terephthalate layer defining the outer face of the packaging serves as a printing medium and makes it possible to provide the packaging thus produced with its external appearance, for example a gloss or matt appearance.

The central layer 13 made of aluminium forms a barrier to external gas, especially oxygen and water vapour, in order to isolate in an efficient manner the foodstuff contained in the packaging.

The first layer 12a of the lower layer 12 of the film 10 is in this case made of polyamide which makes it possible for the packaging to be mechanically strengthened and to prevent perforations from the outside. The second layer 12b, made of polypropylene, acts as a welding agent to allow the edges of the packaging to be welded. The polypropylene also endows some mechanical strength to the packaging and ensures good sealing of the welds.

As a variant, provision may be made for the upper layer 11 of the film forming the outer face of the walls of the packaging to comprise a succession of two layers, an outer polyethylene terephthalate layer and an inner polyamide layer, the central layer 13 still being made of aluminium. In this case, the lower layer 12 forming the inner face of the walls of the said packaging is preferably made only of polypropylene.

According to another variant, the outer layer 11 of the film forming the outer face of the packaging is made only of polyethylene terephthalate, the central layer 13 of aluminium and the lower layer 12 of the film forming the inner face of the packaging is made only of polypropylene.

In general, the polyethylene terephthalate layer has a thickness of between about 10 and 20 µm, the polyamide layer has a thickness also of between 10 and 20 µm, the central aluminium layer has a thickness between about 7 and 12 µm and the polypropylene layer has a thickness of between 30 and 100 µm.

Conventionally, between each layer of the said film 10, an adhesive coating layer is provided to allow the said layers forming it to be secured together by virtue of a lamination operation.

Furthermore, provision can also be made for the inner face of the polyethylene terephthalate layer to be printed. Of course, markings can also be made on its outer face, which is generally the case after making the pouch in order to affix thereon for example a use-by date.

The invention relates in particular to the manufacture of a packaging from one or more film(s) especially of the type described in relation to Figure 1.

For the following description of the invention, reference will be made to the aforementioned film 10 having an outer layer 11 - forming the outer face of the packaging-made only of polyethylene terephthalate, a central layer 13 made of aluminium, and a lower layer 12 - forming the inner face of the packaging - made only of polypropylene. But, of course, the invention can be implemented with any structure for the film previously described. More generally, it is applicable to any film having at least one plastic layer.

According to the invention, the scored line or lines are preferably made in the film prior to the operations of making the packaging from this film. The operations of making the packaging from this film are known per se.

Figures 2 to 5 illustrate a device according to the invention making it possible to produce at least one scored line in a film.

The device comprises a cylindrical reference roller 21 and a scoring roller 22 which is also cylindrical. The axes of the rollers 21 and 22 are parallel.

The rollers 21 and 22 are mounted so that they can rotate, for example, between two lateral uprights 23a, 23b of a frame 20. Beams 24a, 24b may connect the upper parts of the uprights 23a, 23b in order to stiffen the assembly.

During the scoring operation, the film 10 passes between the two rollers 21 and 22.

The reference roller 21 acts as a bearing surface for the film 10. More specifically, it is the upper layer 11 of the film 10 which bears on the roller 21.

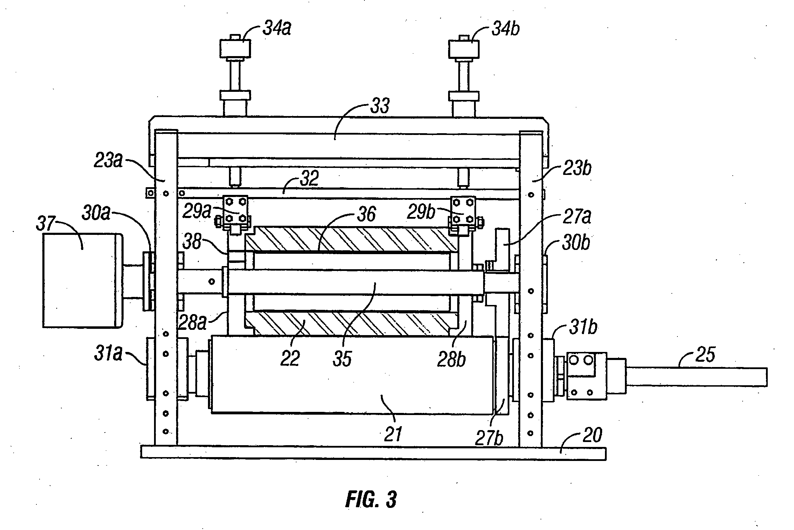

The scoring roller 22 has four ribs 26a, 26b arranged on its circumference. They are not shown in Figure 3 for the sake of clarity of this figure. These ribs 26a, 26b therefore form projections on the circumferential surface of the roller 22. Each rib is located in a respective radial plane about the roller 22.

Each of the ribs 26a, 26b is provided to cut into the lower layer 12 of the film 10 - that is to say the layer forming the inner face of the walls of the pouch - in order to form thereon a corresponding groove as the film 10 travels between the rollers 21 and 22. Each groove has the effect of weakening the film 10 at this location and therefore forms a scored line.

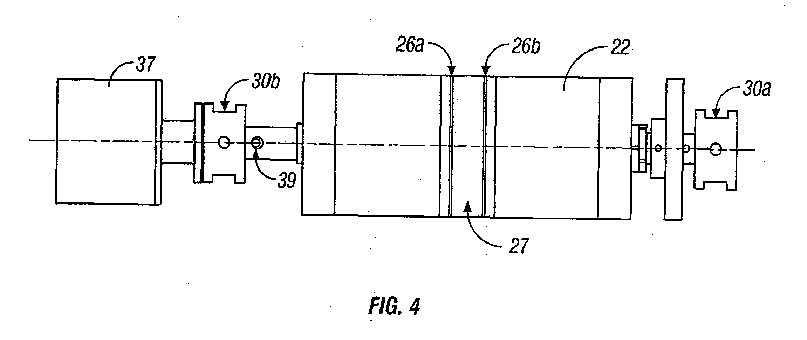

The ribs 26a, 26b preferably have a cutting profile capable of incizing the lower layer 12 of the film 10, without removing material. Thus, the ribs 26a, 26b may have a pointed triangular cross section as illustrated in Figure 4. The cross section of each rib 26a, 26b is preferably identical around the entire circumference of the roller 22. Furthermore, all the ribs 26a, 26b preferably have the same cross section and the same dimensions.

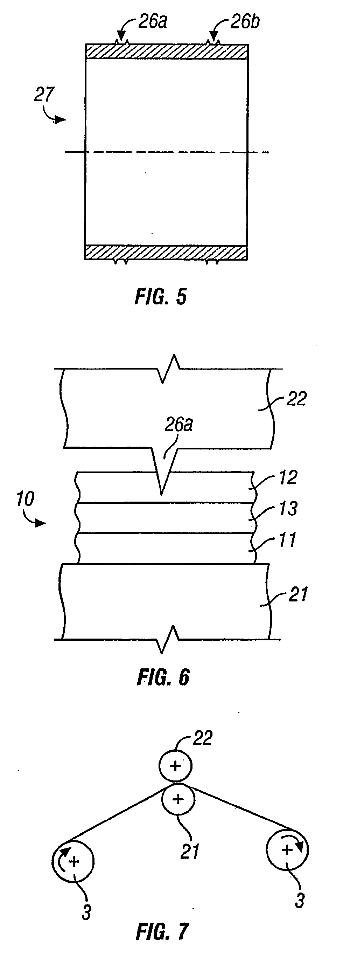

Figure 6 shows a longitudinal section taken locally in the region between the scoring roller 22 and the reference roller 21 at one of the ribs 26a. As indicated, the film 10 rests on the reference roller 21 while the rib 26a has penetrated into the lower layer 12. The rib 26a only penetrates into part of the thickness of the lower layer 12 of the film 10, but does not perforate this layer. Thus the rib 26a does not damage the aluminium layer 13 given the fragility thereof, and therefore it will carry out its function of sealing the pouch correctly. Of course, this description is also valid for the other ribs 26a, 26b which are not shown in Figure 6.

In operation, the reference roller 21 is preferably rotated in order to have a tangential speed equal to the run speed of the film between the rollers 21 and 22. Thus, there will be no friction between the film 10 and the roller 21. Similarly, it is advantageous for the roller 22 also to be rotated so that the ribs 26a, 26b have a tangential speed equal to the run speed of the film between the rollers 21 and 22. Thus, there will be no or very little friction between the side walls of the ribs 26a, 26b and the walls of the groove which they form in the lower layer 12 of the film 10. For this, it is possible to provide a drive shaft 25 in order to rotate one of the rollers and gearing 27a, 27b in order also to transmit the rotation to the other roller. As a variant, it is possible for the reference roller 21 to be mounted free to rotate, in which case it is the film 10 which will rotate it. The same may hold true for the scoring roller 22.

In practice, it is advantageous that the ribs 26a, 26b are not arranged directly on the surface of the roller 22, but rather on a ring 27 which is mounted on the roller 22. In this way, it is easy to change the number of scored lines, their shape and/or their depth by replacing only the ring 27 instead of the complete roller 22.

Given the small thickness of the lower layer 12 of the film 10, the device is designed to give accurate positioning of the ribs 26a, 26b with respect to the surface of the reference roller 21 at least when it is important that this layer is not perforated to prevent damaging the central aluminium layer 13. To this end, the roller 22 may be embodied as follows.

The roller 22 has a running track 28a, 28b at each end, which bears on a corresponding surface of the reference roller 21. This contact therefore makes it possible to position the scoring roller 22 accurately with respect to the reference roller 21. To provide good contact of the running tracks 28a, 28b on the roller 21, provision is made to tension the rollers 21 and 22 one against the other. This can be obtained, for example, by means of press rollers 29a, 29b bearing on the running tracks 28a, 28b on the side away from the reference roller 21. In this case, the scoring roller 22 is mounted so that it can rotate on the lateral uprights 23a, 23b via bearings 30a, 30b - for example ball bearings or the like - which advantageously slide vertically in the uprights 23a, 23b. For this purpose, the bearings 30a, 30b may, for example, be guided by a vertical slot made in the lateral uprights 23a, 23b. In contrast, the reference roller 21 is mounted so that it can rotate on the lateral uprights 23a, 23b by means of bearings 31 a, 31b - for example ball bearings or the like - which are fixed with respect to the structure 20 at least in operation. For this purpose, the bearings 31a, 31b may simply come to a stop at the bottom of the aforementioned vertical slot made in the uprights 23a, 23b. The press rollers 29a, 29b may be mounted on a beam 32 which slides with respect to the uprights 23a, 23b. Screws 34a, 34b screwed through a fixed beam 33, connecting the lateral uprights 23a, 23b, exert pressure on the sliding beam 32, and consequently the press rollers 29a, 29b press the scoring roller 22 onto the reference roller 21. It is advantageous to provide a force sensor in order to measure the force exerted by the scoring roller 22 on the reference roller 21 so that this force can be set to a desired value. This force sensor may comprise two piezoelectric sensors on which the bearings 31a, 31b of the reference roller 21 rest at the bottom of the guiding slot of the lateral uprights 23a, 23b. Given that the bearings 31a, 31b of the reference roller 21 are fixed in this example, it is preferably the reference roller 21 which is directly driven by the drive shaft 25, the gearing 27a, 27b transmitting the rotation to the scoring roller 22. Of course, the assembly described to tension the rollers 21 and 22 one against the other can be reversed with respect to the rollers 21 and 22.

The running tracks 28a, 28b are preferably attached to the roller 22. For this purpose, they can be mounted with adjustment on the end of the roller 22. It is preferable to resort to accurate adjustment, for example uncertain adjustment of the H7g6 type.

In order to be able to position the ribs 26a, 26b accurately with respect to the reference roller 21, it is advantageous to accommodate the radial clearances. There is in fact a radial clearance between the running tracks 28a, 28b and, if appropriate, also between the scoring ring 27 and the roller 22. This is because, in order to facilitate mounting of the ring 27 on the roller 22, it is advantageous to provide a clearance between them. These radial clearances can be accommodated by expanding of the scoring roller 22.

To this end, the roller 22 may be made in the form of a hollow tube. The roller 22 is borne by a shaft 35 by means of the running tracks 28a, 28b each one made in the form of an end plate and attached to the ends of the roller 22 by adjustment, as already indicated. Furthermore, the shaft 35 bears the gearwheel 27a of the gearing transmitting the rotation from the roller 21 to the roller 22. The end plates forming the running tracks 28a, 28b are mounted on the shaft 35 and preferably adjusted to fit closely. As such, there is no additional radial clearance at this level. Furthermore, the end plates forming running tracks 28a, 28b may be secured to the shaft 35 by means of one or more radial pins.

Preferably, the roller 22 is mounted without axial clearance, for example, by virtue of a shoulder of the shaft 35 against which the end plate 28a presses and a nut pressing against the other end plate 28b. The reference roller 21 is preferably also mounted on the structure without axial clearance.

A heating element 36 is placed inside the roller 22. Advantageously, this is one or more hollow cylindrical mica-insulated heating resistors. To ensure good transmission of heat to the roller 22, the resistor or resistors are preferably pressed against its inner wall. Advantageously, the resistor or resistors are split and an expandable collar (not shown) placed inside the resistor or resistors press the latter against the inner wall of the roller 22.

The heating of the roller 36 can be set to completely adjust the radial clearances. It may advantageously be adjusted to cause a tight fit between the ring 27 and the roller 22 and preferably also between the end plates 28a, 28b and the roller 22.

Of course, a person skilled in the art will choose the materials for the parts depending on their expansion coefficient and will determine the dimensions of the parts and the cold adjustments to obtain the desired clearance with respect to the temperature reached when hot.

The temperature to which the roller 22 is brought is preferably less than the melting point of the lower layer 12 of the film 10, in this case 160°C. The temperature to which the outer surface of the roller 22 is brought may advantageously be chosen within the range from 80 to 130°C.

Moreover, it is preferable that only the ribs 26a, 26b come into contact with the film 10, but not the rest of the surface of the ring 27 or of the roller 22, which is hot, in order to prevent possible softening of the lower layer 12 of the film 10.

It is advantageous to provide temperature control for the roller 22 using, for example, a power controller in order to supply the heating resistors. To this end, a temperature probe can be installed inside the roller 22 in order to measure the temperature thereof. Preferably, it is directly fastened to the inner wall of the roller 22.

To supply the heating resistors 36 with electricity and to connect the temperature probe, a brush commutator 37 is provided at the end of the shaft 35, on the outside of one of the lateral uprights 23a, 23b. The electrical wires connecting the resistors 36 and the temperature probe may emerge from the roller 22 through an opening 28 made in the end plate 28a which is on the same side as the commutator. The wires may then pass inside the shaft 35 through an opening 39 to come against tracks arranged at the end of the shaft and which cooperate with the brushes of the commutator 37.

Preferably, the reference roller 21 is not heated. If appropriate, it may be cooled for example by ventilation. As such, there is no expansion of the reference roller 21 affecting the positioning of the film 10 with respect to the ribs 26a, 26b. Of course, the diameter of the reference roller 21 is determined according to the width of the film 10 in order to be sufficiently stiff.

To ensure the film 10 is properly placed on the reference roller 21, it is preferable that the running track of the film 10 makes an angle with the reference roller 21, as illustrated schematically in Figure 7. Figure 7 shows, by way of example, a first reel 3 from which the film 10 is unwound and a second reel 3 onto which the film 10 is wound after the scored lines are produced by the scoring roller 22.

The scored lines may be continuous in the film 10, that is to say that each scored line corresponds to an uninterrupted groove made in the lower layer 12. For this, the ribs 26a, 26b are continuous over the entire circumference of the ring 27 of the roller 22.

The scored lines may also be discontinuous in the film 10, that is to say that each scored line corresponds to a successive series of incisions produced in the lower layer 12. For this, each rib 26a, 26b is discontinuous over the circumference of the ring 27 of the roller 22 so as to form thereon a series of successive teeth. Preferably, the teeth are all identical to each other and two successive teeth are always separated by an identical space. For example, the teeth may have a length of 0.3 mm and a space between two successive teeth of 0.2 mm. These dimensions may also be greater, for example a tooth length of 2 mm and a spacing of 0.8 mm.

Provided the scored lines do not pass through the lower layer 12 of the film 10, they may optionally extend into the edge regions which will be welded together in order to make the pouch. In other words, they then extend over the entire width of the pouch. However, it is also possible not to continue the scored lines into the welding regions. For this, it is enough to remove the ribs at the corresponding portion of the ring 27 of the roller 22.

By way of example, the reference roller 21 can be made from treated and ground steel, as can the running tracks 28a, 28b. The hollow roller 22 may advantageously be made from aluminium because of its expansion coefficient. Its external diameter may be between 150 and 250 mm and the thickness of the wall between 10 and 30 mm. The scoring ring 27 may be made from steel, a steel alloy or brass. The diameter of the reference roller may be between 100 and 300 mm for widths of film 10 of about 500 to 700 mm. The scoring ring 27 may have a thickness of about 3 mm and is preferably polished. The ribs 26a, 26b preferably have a height of between 0.5 and 1 mm. The cold clearance between the ring 27 and the roller 22 may be between 0.1 and 0.4 mm. The power of the heating resistors may be between 1 500 and 3 000 W.

Moreover, it will be noted that the roller 22 can easily be interchanged by virtue of its sliding bearings 30a, 30b, which makes it possible, for example, for another roller 22 of different diameter to be mounted quickly.

In practice, the depth of the groove may be between 50 and 60 µm for a lower layer 12 of 70 µm thickness.

Of course, the number of scored lines may be varied by changing the number of ribs on the ring 27.

Where the scored line is discontinuous, the teeth forming the ribs 26a, 26b may take the shape of needles instead of being elongated.

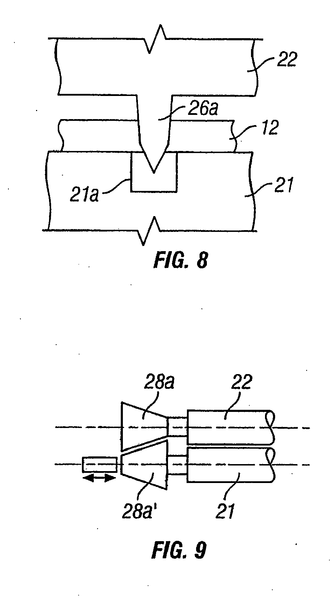

Moreover, it is perfectly possible to use the device to produce grooves in the lower layer 12 before the latter is assembled to the other layers forming the film 10, that is to say before the operation of laminating the film 10. If it is acceptable, for making the packaging and its functionalities, for the lower layer 12 to have scored lines formed by successive perforations, each rib 26a, 26b may be in the form of teeth which are long enough to perforate the lower layer 12. For each rib 26a, 26b, it is possible to provide a corresponding circumferential slot 21 a made in the surface of the reference roller 21. Thus, the teeth will penetrate the slot as illustrated in Figure 8. With this use of the device, it is not useful to provide adjustment for the radial clearances as described above.

An improvement to the device consists in providing adjustment for the distance between the axes of the reference roller 21 and of the scoring roller 22. Thus, it is possible to vary the depth of the grooves or else to adapt the device to films having different thicknesses. For this, the running tracks 28a, 28b and the corresponding bearing regions of the reference roller 21 may be slightly conical. By axially offsetting the conical surfaces of one of the rollers with respect to those of the other roller, the distance between the axes is varied. For example, as illustrated schematically in Figure 9 for the running track 28a, the end plates forming running tracks 28a, 28b are conical and arranged fastened to the roller 22. In contrast, end plates - referenced 28a' - having a corresponding outer rolling surface can be mounted on the shaft of the reference roller 21 so that they can be displaced in the axial direction by means, for example, of screws. Thus it is possible to vary the depth of the grooves, for example, over an interval of 50 µm, or even more, by relative axial displacement of a few millimetres.

We will now describe another device according to the invention for producing at least one scored line in a film. To form the scored lines, this device is based on a tool having projections in order to penetrate the lower layer 12 of the film 10 and cause plastic flow of the material of the layer 12 in combination, for example, with ultrasound.

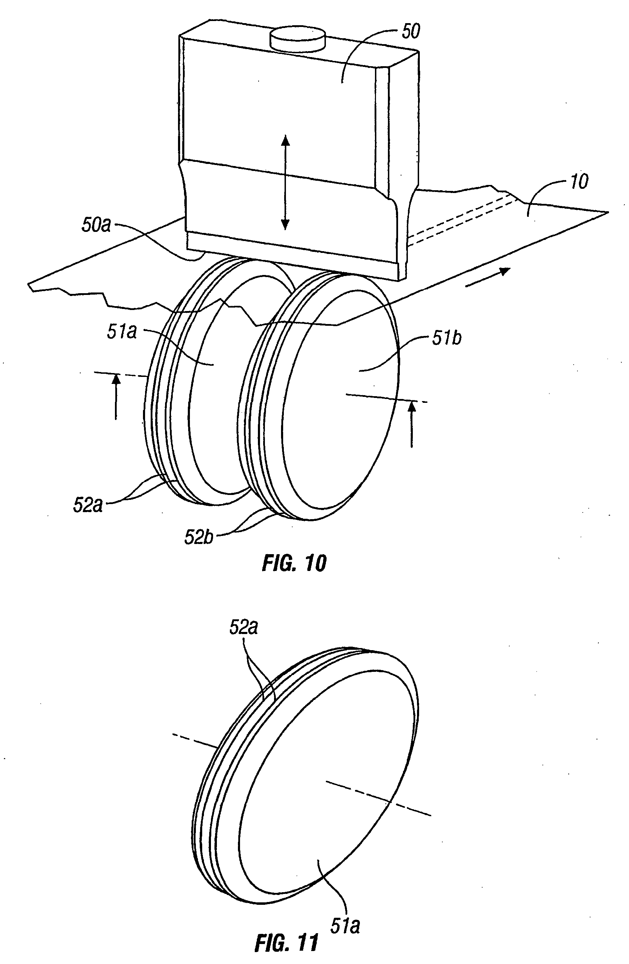

In the embodiment shown in Figure 10, the device comprises two cylindrical scoring wheels 51a, 51b arranged coaxially and mounted so as to rotate preferably on the same shaft (not shown). Each of the scoring wheels 51 a, 51b has two ribs 52a, 52b arranged on its circumference. These ribs 52a, 52b project from the circumferential surface of the corresponding scoring wheel. In the example illustrated, each rib 52a, 52b is located in a respective radial plane on the corresponding scoring wheel 51 a, 51b.

In operation, the film 10 runs between the scoring wheels 51a, 51b on the one hand and a sonotrode 50 on the other. More specifically, the lower layer 12 - that is to say the one forming the inner face of the packaging - is on the same side as the scoring wheels 51a, 51b and the upper layer 11 is on the same side as the sonotrode 50. The film 10 is pressed between the scoring wheels 51a, 51b and the sonotrode 50. The sonotrode 50 vibrates at ultrasound frequencies to allow the plastic flow of the material of the layer 12. The scoring wheels 51a, 51b act as an anvil for the sonotrode. The result of this is that the ribs 52a, 52b penetrate the lower layer 12 of the film 10, the penetration being accompanied by the plastic flow of the material of the layer 12 towards the outside of the groove thus formed by each rib.

The plastic flow of the material towards the outside of the groove may take place either along a single edge of the groove, or along both edges depending on the shape of the cross section of the ribs 52a, 52b. This results in the formation of a bead along one of the edges of the groove or the formation of a respective bead on each side of the groove. These beads have the advantage of increasing the strength of the film 10 around the groove, which improves the guiding when opening the packaging along the scored line thus formed. In a preferred manner, the film 10 runs tangentially to the circumference of the scoring wheels 51a, 51b along the working surface 50a of the sonotrode 50. The ultrasonic vibrating movement of the sonotrode 50 takes place in the direction of the scoring wheels 51a, 51b. In fact, it is advantageous for the plane of the sonotrode 50 to comprise the axis of the scoring wheels 51a, 51b.

Each scoring wheel 51a, 51b has at least one circumferential bearing surface on which, the film 10 bears when it runs between the scoring wheels and the sonotrode 50. The ribs 51a, 51b project from this bearing surface. The height A of the ribs 51a, 51b above the bearing surface determines the depth of the grooves formed in the lower layer 12 of the film 10. Moreover, in order to allow the plastic flow of the material of the layer 12 towards the outside of the groove in order to form one or two beads along the latter, the scoring wheel is provided with a corresponding circumferential recess along the ribs 52a, 52b.

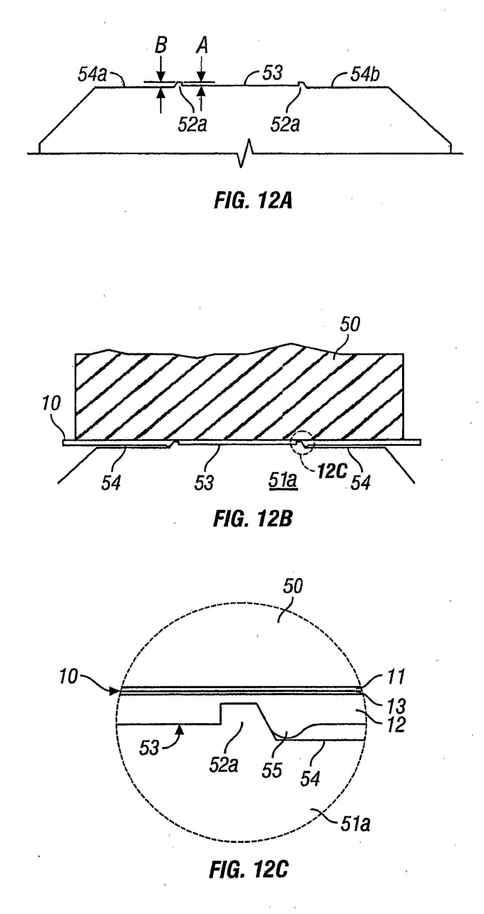

Figures 11 and 12a-c illustrate a preferred rotary-cutter configuration provided to make the material of the lower layer 12 of the film 10 plastically flow towards just one single side of each of the grooves formed. In particular, Figure 12a shows the axial cross section of the scoring wheel 51 a at the ribs 52a. Figure 12b shows, in axial cross section, the film 10 taken between the sonotrode 50 and the scoring wheel 51a and Figure 12c shows a local enlargement of the rib on the right-hand side of the scoring wheel 51a. The circumferential bearing surface on which the film 10 bears when it runs between this scoring wheel and the sonotrode 50 is referenced 53. So that the material plastically flows only towards one edge of the groove, the cross section of the ribs 52a is asymmetric. In this case, the profile of the rib has a wall which is inclined with respect to the bearing surface 53, in order that the rib becomes gradually thinner towards its apex. The material of the lower layer 12 plastically flows along this inclined wall towards the outside of the groove formed by this rib. In contrast, the opposite wall of the profile of the rib is at right angles with respect to the bearing surface 53, or even possibly has a negative taper. Hence, the material of the lower layer 12 does not flow plastically towards the outside along this right-hand wall. The width of the rib obviously determines the width of the resulting groove in the layer 12 of the film 10. By way of example, the width at the apex of the profile of the rib may be chosen from the interval ranging from 0.1 to 0.2 mm. The angle of the inclined wall of the rib with respect to the bearing surface 53 may advantageously be chosen from the interval ranging from 55 to 80°. The height of the rib may be chosen so as to leave only 10 µm of material of the layer 12 under the groove. Thus, for a layer 12 of 70 µm thickness, it is possible to adopt a rib height A of 60 µm. Such dimensioning makes it possible to ensure the integrity of the aluminium central layer 13.

By way of example, the vibration frequency of the sonotrode is between 20 and 70 kHz. Advantageously, it is 40 kHz in the case of the polypropylene layer 12. The amplitude of the ultrasound vibrations is preferably at least 5 µm, but more advantageously at least 20 µm. An amplitude of 25 µm is particularly preferred. Moreover, the diameter of the scoring wheel at the bearing surface 53 is preferably greater than 60 mm. Each scoring wheel 51a, 51b exerts a compressive force on the film 10 against the sonotrode 50, which is advantageously within the interval ranging from 1.5 to 2.5 daN. This compression is preferably exerted by pushing the shaft of the scoring wheels towards the sonotrode, it being possible for the shaft to be mounted on a structure by means of sliding bearings on which the required force is exerted.

In the example illustrated, for each groove formed by the corresponding rib 52a, the plastic flow of the material takes place along the groove on the side away from the other groove formed by the other rib 52a of this same scoring wheel. The bearing surface 53 extends between the two ribs 52a, 52b. It is therefore the height A of the ribs 52a, 52b, measured from the bearing surface 53, which determines the depth of the grooves formed in the lower layer 12 of the film 10. There is no recess in the bearing surface 53 along the ribs 52a since there is no plastic flow outward on this side of the ribs. The circumferential surfaces 54a and 54b extending outwards from the ribs 52a are located at a level lower than that of the bearing surface 53. In other words, the height B of the ribs 52a measured from the circumferential surfaces 54a, 54b is greater than the aforementioned height A. Here, this difference in level forms the aforementioned recess allowing the formation of beads along the grooves formed in the layer 12 of the film 10, as illustrated in Figure 12c in which the bead formed is referenced 55.

Of course, it is possible for the material of the layer 12 to flow plastically outward from the other side of a groove by reversing the aforementioned profile, that is to say by arranging the inclined wall of the rib 52a in question on the side towards the other rib 52a. In this case, a recess can be made in the bearing surface 53 along the rib in question so as to allow the formation of the bead. It is also possible to use the surfaces 54a and 54b as bearing surface and to reduce the level of the surface 53 with respect to the surfaces 54a and 54b so as to define the desired recess.

Of course, if it is desired that the material of the layer 12 flows plastically on either side of the groove, the profile of the rib 52a in question just has to be modified by replacing the right-hand wall with a wall inclined in a similar manner to the opposite wall. In this case, a recess is preferably provided on the scoring wheel along each side of the rib in question. If rib 52a has a symmetrical cross-section, it flows plastically the same amount of material towards each side of the groove and results in forming a bead 55 along each side of the groove having the same shape, dimensions and cross-sectional area. Thus, the mechanical strength of the plastic material layer is increased along each side of the groove to a same extent. On the contrary, if rib 52a is given an asymmetrical cross-section, the proportion of material flowed towards each side of the groove is different and results in forming a bead 55 along each side of the groove having - with respect to the other bead - different dimensions, in particular a different height and cross-sectional area, and possibly a different shape too. Thus, the mechanical strength of the plastic material layer is increased along each side of the groove to a different extent. The highest bead or having the most important cross-sectional area provides the most important increase of mechanical strength to the plastic material layer. As already mentioned, the asymmetrical cross-section can be designed so that the material is flowed plastically outward only towards one side of the groove.

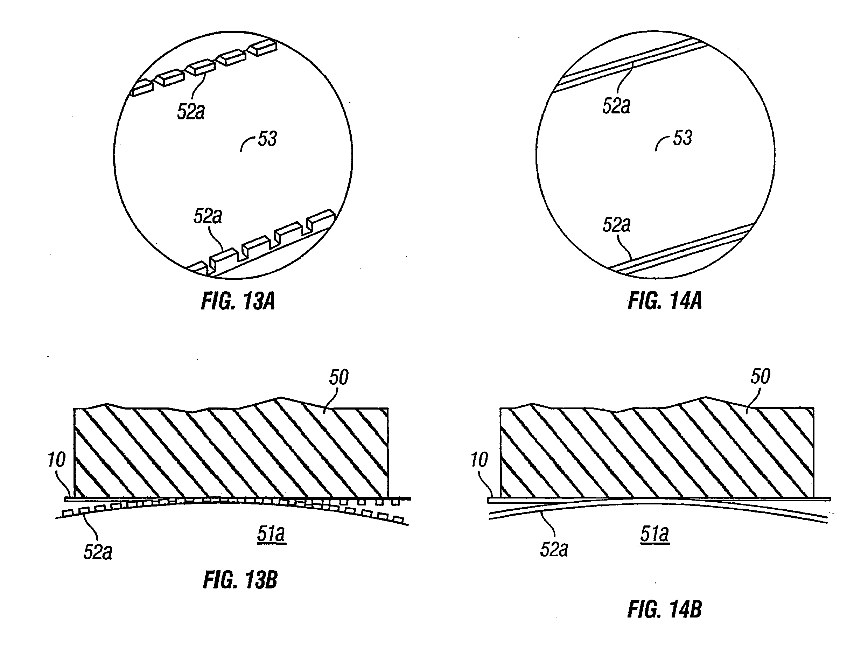

Moreover, it is preferable that the active part of the sonotrode 50 is long enough to cover the whole active circumferential portion of the scoring wheel as shown in Figures 13b and 14b. The scoring wheels may be produced by machining from steel which may have received a surface treatment.

By virtue of this device, it is equally possible to form grooves of the continuous or discontinuous type. To form a continuous groove, the ribs just have to be continuous over the circumference of the scoring wheel as illustrated in Figures 14a-b. To form a discontinuous groove, the rib 52a in question just has to be interrupted at different locations of the circumference of the scoring wheel 51a. In other words, the rib is made in the form of a series of teeth over the circumference of the scoring wheel 51a. Figures 13a-b give an example thereof. It is preferable that the teeth all have the same length and that each of them is separated from the next by the same space in order to attain a scored line having the same preweakening over its entire length. By way of example, the length of a tooth may be chosen from the interval ranging from 0.2 mm to 0.4 mm and a space between two teeth chosen from the interval ranging from 0.1 to 0.3 mm.

In general, the rib preferably always has the same cross section and the same size over its entire length.

Moreover, provided the continuous scored lines do not pass through the lower layer 12 of the film 10, they may optionally extend into the edge regions which will be welded together to make the pouch. In other words, they then extend over the entire width of the pouch. However, it is also possible not to continue the scored lines into the welding regions. For this, the ribs just have to be removed over the corresponding portion of the rotary wheel 51a.

The rotary wheels 52a, 52b can be mounted so that they are free to rotate. They may also be driven in rotation with a tangential speed at their bearing surface 53 which is equal to the run speed of the film 10.

Of course, the description of the scoring wheel 51a is also applicable to the scoring wheel 51b. Moreover, the scoring wheel 51b is preferably identical to the scoring wheel 51a, each one producing in our example two scored lines in a corresponding wall of the packaging subsequently made.

Instead of having two scoring wheels 51a, 51b, it is possible to use only a single wider scoring wheel on which the four ribs 52a, 52b are arranged. Nevertheless, it is advantageous to use two separate scoring wheels in order to be able to adjust their axial spacing, for example, by virtue of spacers of different length.

Of course, the number of scored lines can be freely chosen by supplying a corresponding number of ribs.

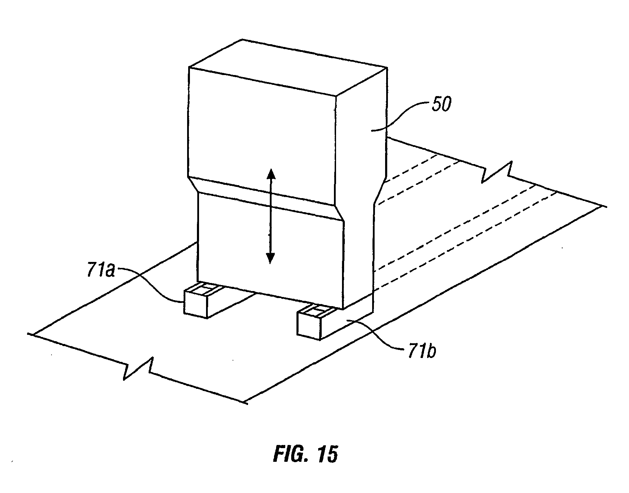

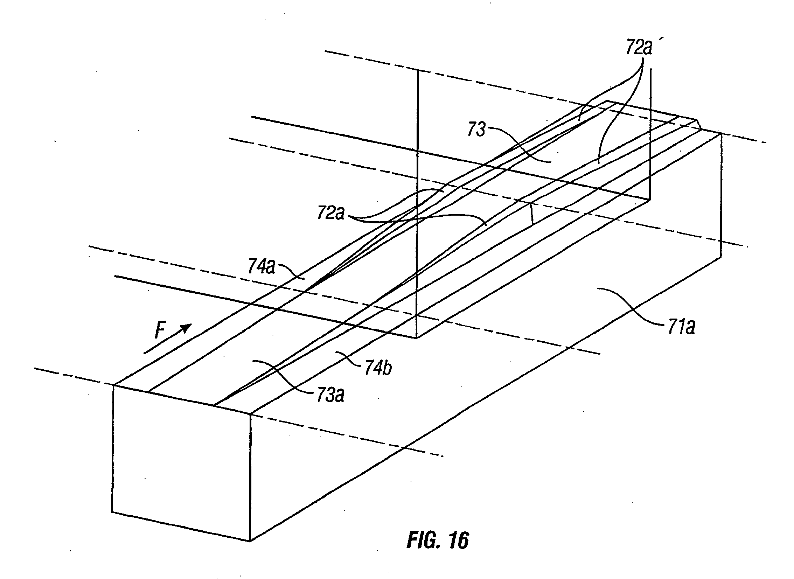

Figures 15 to 21 illustrate another embodiment of the ultrasound device according to the invention in which the scoring wheels 51a, 51b are replaced by two shoes 71a, 71b. Thus the film 10 is pressed between the sonotrode 50, on the one hand, and the shoes 71a, 71b, on the other. This embodiment of the invention makes it possible to produce continuous grooves with excellent control of the plastic flow of the material.

Each of the shoes corresponds overall to the arrangement of the circumference of the scoring wheels 51 a, 51b of Figure 10, but in a developed form. For this reason, the description given of this subject relating to the scoring wheel of Figure 10 is applicable *mutatis mutandis.* However, the configuration with shoes may have beneficial specific features which we will see.

We will describe the shoe 71a with reference to Figures 15 to 21, this description being valid also for the other shoe 71b. The arrow F denotes the run direction of the film. The shoe 71a has two parallel straight ribs 72a and a bearing surface 73 extending between these two ribs. In operation, the running film 10 bears on the surface 73. The ribs 72a project from the bearing surface 73. The maximum height of the ribs 72a with respect to the bearing surface 73 defines the depth of the groove formed in the lower layer 12 of the film 10.

The surfaces 74a, 74b are located at a level lower than the bearing surface 53 in order to allow the material of the layer 12 to flow plastically outwards from the groove along which a bead 75 is therefore formed. The profile of the ribs is similar to those 52a, 52b of Figure 10.

Of course, it is possible for the material of the layer 12 to flow plastically outwards from the groove, that is from one side of the groove, or from the other, or from both depending on the profile chosen for the rib in question. A corresponding recess is then arranged along the walls of the rib serving to make the material flow plastically outwards from the groove formed. Similarly to the embodiment of fig. 10, ribs 72a may have a symmetric or an asymmetric cross-section depending on the amount of material to be flowed plastically towards each side of the groove.

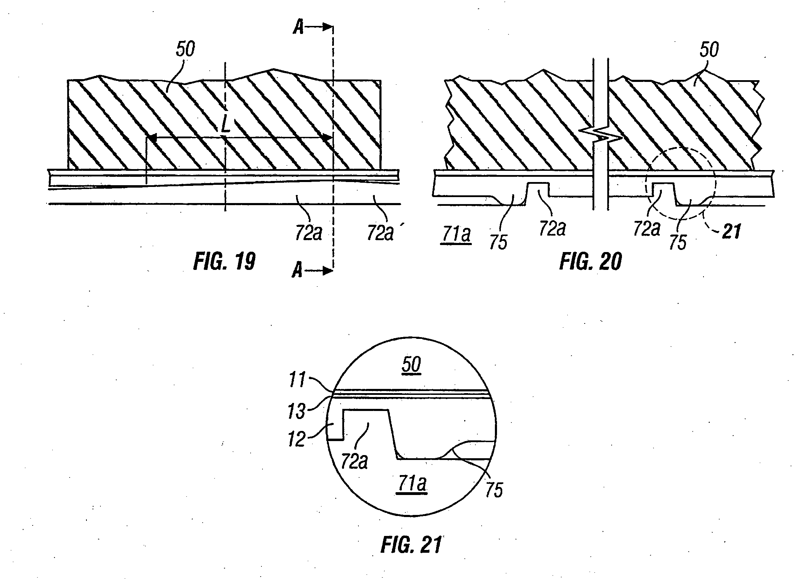

Moreover, it is preferable that the active part of the sonotrode 50 is long enough to cover the entire active part of the ribs, as shown in Figures 19.

It is advantageous to provide on the shoe a surface 73a forming a ramp upstream of the start of the ribs 72a and which gradually reaches the level of the bearing surface 73. Thus the film 10 arrives on the shoe without encountering a sharp edge capable of damaging the film. In the example illustrated, the ramp starts at the surfaces 74a, 74b.

The upstream and downstream directions are of course defined according to the run direction of the film 10.

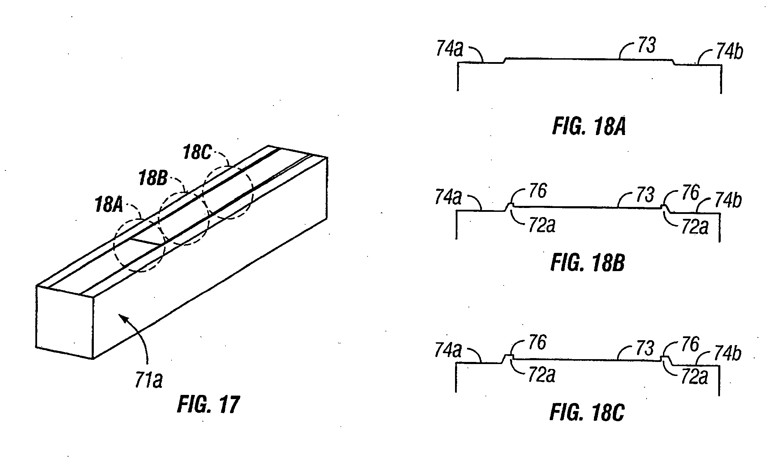

It is advantageous that provision is made for the ribs 72a to gradually increase in height from the upstream side of the shoe towards the downstream side. Similarly, it is advantageous that provision is made for the ribs 72a to gradually broaden from the upstream side of the shoe towards the downstream side. The broadening preferably takes place towards the side of the inclined wall of the rib, that is to say towards the side towards which the rib makes the material flow plastically. The overall shape of the cross section of the rib preferably remains identical over its entire length. Figures 18a-c illustrate this gradual change. Figure 18a shows a cross section at the start of the ribs 72a where they are coincident with the bearing surface 73. Figure 18b shows a cross section taken half-way along the ribs 72a. Figure 18c shows the cross section taken at the apex of the ribs 72a. By way of example, the width of a rib 72a changes linearly from 0 to 150 µm and its height changes linearly from 0 to 60 µm, the length of the rib being 12 mm. Because of this gradual change, the plastic flow of the material of the layer 12 of the film 10 is gradual and controlled. In particular, it makes it possible to ensure a plastic flow outwards from the groove towards only one edge thereof. The strengthening line along the groove is all the stronger and therefore efficiently prevents the tear along the scored line moving away from the latter on the side of this bead during opening of the packaging by the user. It also allows very wide grooves to be made by virtue of the length of the ribs, which may be great. The length L of the rib 72a (not including the part 72a' described below) - which penetrates the layer 12 - is preferably between 5 and 75 mm for ultrasound at 40 kHz, and more particularly between 8 and 20 mm in the case of polypropylene: in the example shown in Figure 19, the length L is 12 mm. For lower ultrasound frequencies, the rib may be even longer.

Moreover, it is also advantageous that the height of the ribs 72a decreases gradually from the highest point of their apex in the downstream direction. This portion is referenced 72a'. This allows a gradual release of the ribs out of the groove while providing proper shaping of the walls of the groove.

Finally, it is advantageous that the profile of the rib has an apex 76 forming an edge parallel to the bearing surface 73. This has the effect of giving a flat groove bottom, but may also make it possible to release the rib from the layer 12 by switching off the ultrasound. This is because, when the plastic flow stops, the rib automatically rises again towards the surface of the layer 12 over which it slides without damaging it, because of the flat bearing surface defined by the apex 76 of the rib. Thus it is possible to break the scored line, for example, in the regions subsequently serving for welding the edges of the packaging.

The film 10 is preferably compressed by pressure from the shoes towards the sonotrode 50. In this case too, the force exerted by each shoe on the film is advantageously in the interval ranging from 1.5 to 2.5 daN.

Here again, the number of ribs per shoe and the number of shoes may be varied in consideration of the number of scored lines to be formed.

The shoes may be produced by machining from steel which may have received a surface treatment.

The ultrasound devices described are advantageous because the ribs forming a projection are made on the anvil - that is to say the scoring wheels or the shoes in the examples described - and not on the sonotrode. As a result, it is possible to give very variable shapes and dimensions to the projections serving to form the scored line since they are not subject to ultrasound, while the active surface of the sonotrode 50 can simply be flat and therefore particularly suitable for ultrasound vibrations. In contrast, if the projections were formed on the sonotrode, the shapes and dimensions would be limited because of the stresses induced by the ultrasound vibrations. Moreover, these devices make it possible to operate at high film run rates, up to 200 m/min, or even more.

The devices of the invention are particularly advantageous because they make it possible to use a cut and/or plastic flow preventing material being removed from the layer 12 during formation of the scored line. Thus, there is no risk of contaminating the food content of the packaging. Nor is there any burning of the layer 12 of the film 10, nor smoke nor spraying of particles of material from this layer at least in the case of plastic flow with ultrasound. Furthermore, the film is less weakened at the scored line than in the case of laser technologies which involves exceeding the melting point of the material of the layer in question of the film, which locally alters the structure of the material and thus makes the layer more resilient. This drawback does not exist when using a cut and/or plastic flow by ultrasound since the melting point is not exceeded.

Moreover, the continuous scored lines are preferable to the discontinuous scored lines since the former provide better guiding when the packaging is opened by the user. This is because, in the case of the latter, guiding of the opening is not provided reliably between two successive notches or holes. In the case of discontinuous scored lines, it is preferable to have elongated and aligned notches rather than having round holes obtained, for example, with needles. This is because the elongated notches promote guiding of opening along the scored line, unlike round holes.

It is advantageous that the scored lines are not produced by complete perforation of the lower layer 12 in the case of the films 10 taken as an example, particularly in the case of continuous scored lines. Where the scored lines pass through the edge regions subjected to welding when the packaging is made, the welding remains possible at the groove of the scored line. Welding would not be possible in the case where the groove forming the scored line passes through the entire layer 12 and this would result in a fault in sealing the packaging. Moreover, the part of the layer 12 remaining under the groove which does not pass through protects the weaker layer 13 especially against accidental folding of the packaging along the scored line.

In general, the devices of Figures 10 to 21 are more advantageous than that of Figure 2 if they operate on multilayer films, since the reference surface for positioning the film with respect to the projection bears on the layer 12, that is to say the layer in which the scored line is produced. Therefore, the depth of the continuous or discontinuous groove is better controlled since the tolerances on the other film layers are not involved. The device of Figure 2 may be more advantageous where the device operates on a single-layer film - for example before lamination - if it is desired to control the thickness of material remaining under the groove better.

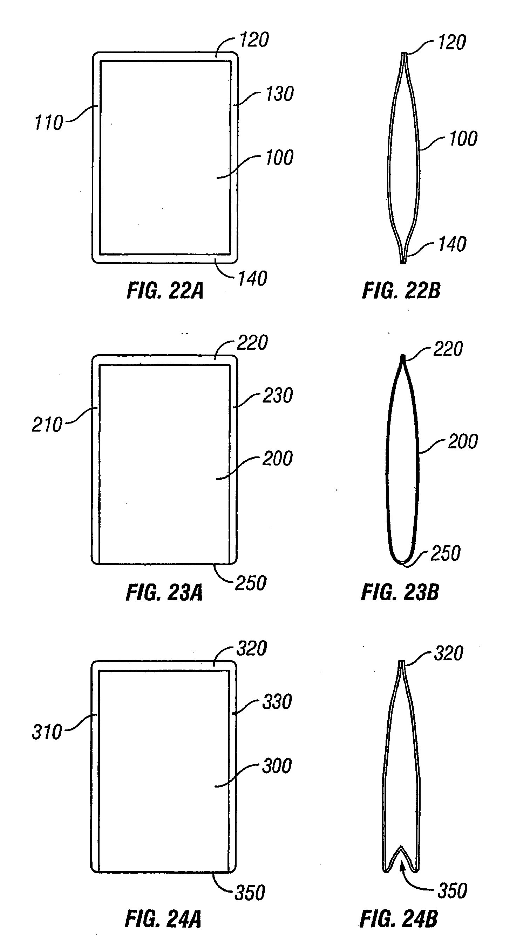

Figures 22a to 26c illustrate various examples of packagings which can be produced from films bearing scored lines produced according to the invention.

In Figures 22a and 22b, a packaging 100 is shown which is in the form of a pouch or bag hermetically sealed by welding. This packaging 100 is a flat bag, that is to say that it comprises two walls welded together on the four sides 110, 120, 130, 140.

In Figures 23a and 23b, another packaging 200 of the flat pouch type is shown, which comprises two walls welded only on three sides 210, 220, 230 out of four. It has a bottom 250 which is not welded, as shown more particularly in Figure 23b. In other words, the pouch is made from a sheet folded in two, the folded region defining the bottom 250.

In Figures 24a, 24b, 25a, 25b, 25c and 26a, 26b, 26c, packagings 300, 400, 500 of the pouches with gussets type are shown.

More particularly, Figures 24a and 24b show a packaging 300 comprising three welded sides 310, 320, 330 and a bottom 350 comprising a gusset made by folding.

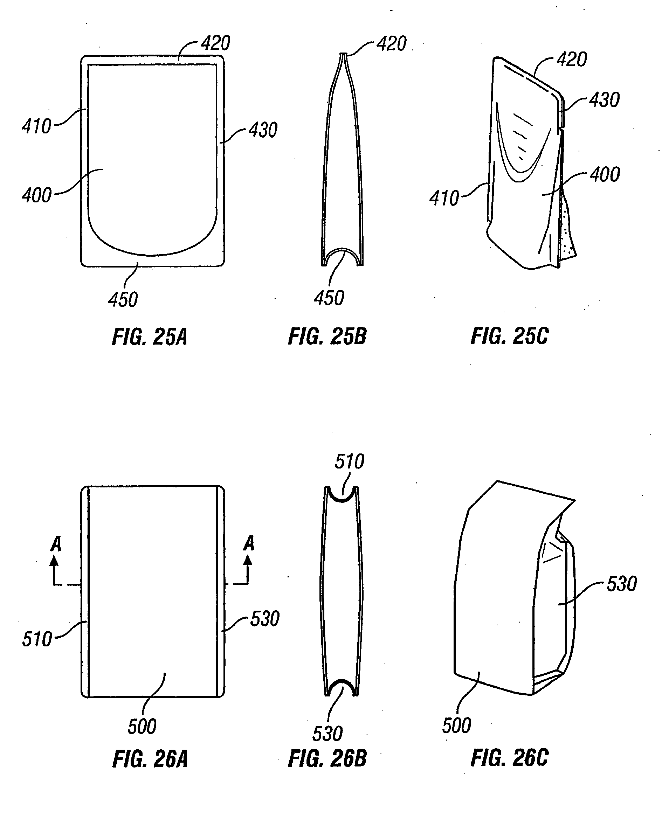

Figures 25a, 25b and 25c show another type of pouch with gusset comprising three welded sides 410, 420, 430 and a bottom 450 with a gusset made with two welded parallel edges.

Figures 26a, 26b, 26c show a packaging 500 which comprises two side edges 510, 530 welded so as to produce on each of the edges 510, 530 a gusset, as is more particularly shown in Figures 26b and 26c.

The packagings 100, 200, 300, 400 and 500 shown respectively in Figures 22a to 26c may especially be designed to be sterilized after they have been filled and closed. In general, these packagings in the form of a bag or pouch are designed to contain foodstuffs, for example foodstuffs for animals. Thus, they are produced from materials which must withstand sterilization in a moist atmosphere and under pressure like those given as an example in relation to Figure 1.

Of course, types of packagings other than those 100, 200, 300, 400 and 500 illustrated can be produced by applying the invention.

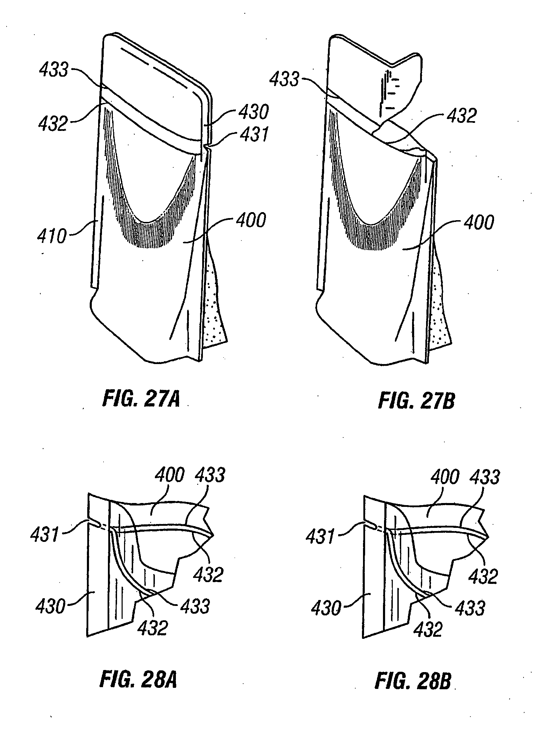

Figures 27a and 27b more particularly show a packaging according to the invention of the bag type with a gusset shown in Figures 25a, 25b and 25c, with three welded sides and a gusset formed in its bottom. As shown in Figure 27a, this packaging 400 comprises, in its top part, on each inner face of its walls, two closely spaced parallel scored lines 432, 433. They may be produced with a device according to the invention in the lower layer of the film from which the packaging is manufactured. The space between the two parallel scored lines is between about 2 and 5 mm.

In the embodiment shown, each inner face of the walls of the packaging 400 comprises the two scored lines 432, 433, but it is also possible to make provision for a single inner face to have the two parallel scored lines.

According to one embodiment, the scored line extends over the entire width of the film, that is to say the entire width of the packaging as is shown more particularly in Figure 27a and in detail in Figure 28a. Thus, as shown in these figures, the scored lines extend over the welded edges 430, 410 of the said packaging 400.

According to a variant more particularly shown in Figure 27b, provision can be made to produce each scored line only on part of the width of the film, that is to say part of the width of the packaging, leaving the two longitudinal edges 430 of the film, intended to be welded to make the said packaging, free of grooves or holes. Thus, as is shown in Figure 28a, each scored line extends over part of the width of the said packaging 400, being interrupted at the side welds 430.

As is shown in Figures 27a, 28a and 28b, provision may be made for at least one welded side edge 430 of the packaging 400 to comprise a notch 431 for initiating opening located between two scored lines. According to the embodiment shown in Figure 28a, the scored lines 432, 433 start directly from the notch 431 for initiating opening. As a variant, the scored lines could extend up to the edge of the packaging, thereby surrounding the initiating notch. In contrast, according to the embodiment shown in Figure 28b, the scored lines 432, 433 start from the welded edge 430; there is therefore an unscored gap between the notch 431 for initiating opening and the scored lines 432, 433.

The notch 431 for initiating opening promotes tearing of the materials forming the packaging. More particularly, the tear initiated at the notch 431 for initiating opening is propagated in the weld region 430 in the direction of the opposite weld 410. This tear propagates over each of the walls of the packaging until it encounters one of the two scored lines 432 or 433 provided on the inner face of each wall of the packaging. The tear continues along this scored line and guides the opening of the said packaging up to the opposite side, as is more particularly shown in Figure 27b.

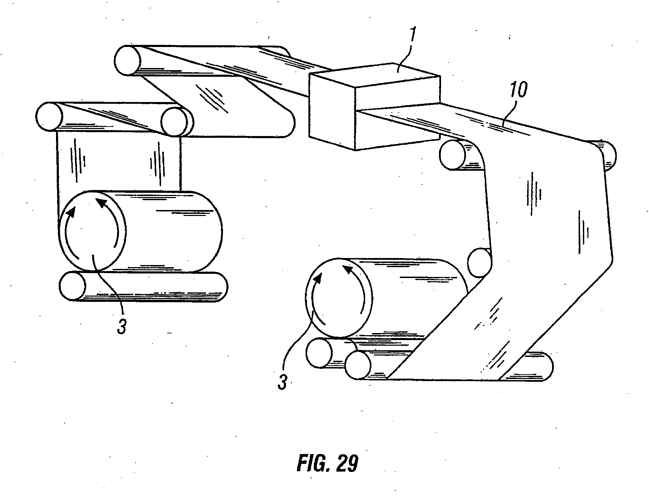

As is more particularly shown in Figure 29, the scored lines according to the invention may be produced on a film which is wound on reels 3 and continuously fed for manufacturing several packagings. The device producing the scored lines is shown schematically and is referenced 1. As is shown on the film 10, once the film has been scored in several particular locations, it will be wound on a reel 3 for subsequent use on packaging machines or machines for manufacturing empty packagings.

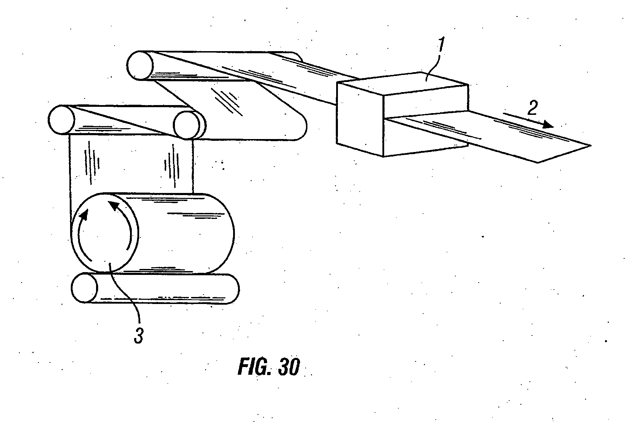

Provision may also be made to produce these scored lines, as shown more particularly in Figure 30, directly on the packaging machine or the machine for manufacturing empty packagings between the operation of unwinding the reels 3 of film and welding the sides of the packagings. The device producing the scored lines is also shown schematically and is referenced 1. The arrow referenced 2 indicates the direction towards the rest of the packaging machine or the machine for manufacturing packagings.

Moreover, it is preferable to avoid scored lines in the form of perforations of the layer 12 made by teeth or needles before laminating the layers of film 10 if the latter is wound on reels before making the packagings. This is because the perforation causes a local deformation of the film which causes lifting of the edges around each hole. This has the effect of creating an irregular winding of the film on the reel with creation of a swelling at the perforations and the risk of delaminating the film layers around the holes. In this case, it is therefore appropriate to prefer scored lines which do not completely pass through the layer 12.

It is particularly advantageous that a groove, whether continuous or discontinuous, forming a scored line is bordered by a bead on only one side. The bead provides the plastic material layer with reinforced strength along the groove. If a wall of the packaging has this scored line close to one of its edges, the fact of arranging the bead on the side away from this edge prevents, during opening of the packaging along the scoring, the tear leaving the scored line and prevents it propagating towards this opposite side of the packaging where the foodstuffs are located, which would then risk them being accidentally spilled. However, it is even more advantageous for there to be at least two scored lines in the same wall of the packaging and for these to run close to each other as in the example of Figure 27a. In this case, by forming the beads essentially along each scored line on the side which is away from the other scored line, as is shown in Figure 20, the beads prevent the tear, during opening of the packaging, from moving away from the scored line towards the side having the beads. The result of this is that the tear propagates only along the scored line or is deflected towards the other scored line along which the tear then continues, and so on and so forth. In other words, the tear for opening the packaging propagates only between the two scored lines.

Similar advantageouses are obtained in case a groove, whether continuous or discontinuous, forming a scored line is bordered by a bead on each side of the groove, the beads being asymmetrical. The term "asymmetrical beads" refers to beads of which one has a height greater than the other with respect to the surface of the film. It refers also to a bead having a cross-sectional area being greater than the cross-sectional area of the other of the said beads (the cross-sectional areas being considered perpendicular to the scored line). The bead having the greatest height or, more generally, the bead having the greatest cross-sectional area increases the mechanical strength of the plastic material layer along the scored line to a greater extent with respect to the other bead. Thus, the bead with greatest height or more generally the bead having the greatest cross-sectional area - which provides the greatest mechanical strength to the plastic layer along the scored line - can be arranged on the same side of the groove as described previously in case of a single bead formed along each scored line and provides a similar barrier effect to the tear propagation along the scored line. Therefore, it is preferable that the highest bead is at least 30%, preferably at least 50%, more advantageously at least 100%, higher than the other bead. More generally, it is preferable that the bead of greatest cross-sectional area is at least 30%, preferably at least 50%, more advantageously at least 100%, greater than the cross-sectional area of the other bead. The defined heights or cross-sectional areas can of course be obtained with a device according to the invention by defining accordingly the cross-section of the flowing ribs as already described.

The devices of Figures 10 to 21 use plastic flow by ultrasound which can be removed to produce the scored line solely by cutting the material of the layer 12. To do this, the sonotrode just has to be replaced with a cylindrical roller or a flat plate in the case of Figure 10, this roller or this plate serving to press the film 10 against the scoring wheels 51a, 51b. Likewise, the sonotrode in the case of Figure 15 may be replaced with a flat plate pressing the film 10 against the shoes 71a, 71b. Of course, it is then preferable to alter the profile of the ribs so that they cut in a manner similar to the device of Figure 2.

The device of Figures 2 to 14 may also use plastic flow of the material of the layer 12 outwards from the groove by heating, for example, the roller 22 to a temperature such that the ribs 26a, 26b reach a temperature which is high enough to make the material of the layer 12 flow plastically. The profile of the ribs may then be altered in a manner similar to those 52a of Figure 11. Nevertheless, plastic flow by ultrasound is more advantageous since the metal parts of the tooling, that is to say the ribs, remain cold enough so as not to be contaminated by the material of the layer 12, the melting point of the latter not being exceeded.

Of course, application of the invention is not limited to the film of the type taken as an example. It is applicable to any film having a plastic layer in which it is desired to form the scored line or lines. In particular, it can be applied to films which do not have an aluminium central layer or else to single-layer plastic films. Of course, if the walls of the packaging are made from a single-layer film, the scored lines will not be produced in the form of perforations so as to ensure the packaging is sealed.

The devices of the invention may operate not only directly on a multilayer film having a plastic layer, such as for example that of Figure 1, but also on a plastic layer before assembly with other layers in order to form the multilayer film. In the latter case, the devices according to the invention, including those using plastic flow by ultrasound, make it possible to produce scored lines in the form of perforations in this plastic layer without risk of damaging other layers.

Moreover, with respect to the devices of Figures 2 to 14, the ribs may not only be arranged in a radial plane of the roller 22 or scoring wheel 51a, 51b, but may also extend transversely along any line for the purpose of forming, for example, curved scored lines. However, it is preferable that the ribs are arranged on the circumference of the roller or scoring wheels so as to provide a progressive plastically flowing out of the material to form beads on the surface of the plastic material layer when providing the scored lines with the flowing technology. Therefore, it is preferable that the ribs do not extend axially on the circumference of the roller or scoring wheels. Indeed, if the ribs extend axially on the circumference of the scoring wheels, the sonotrode undergoes energy bursts each time a rib faces the sonotrode. These energy bursts can be detrimental to the sonotrode. Further, the material of the film layers tends to be compressed which may be detrimental to the desired properties of the layers and the plastic material is not necessarily flowed plastically out of the layer in order to form bead(s). Furthermore, the sonotrode would have to be as wide as the rib or several smaller sonotrodes would have to be located contiguously to cover the width of the rib, but the

Although the film has been described as running with respect to the device, and advantageously as running continuously with respect to the device, it is also possible according to the invention to have the film stationary at the moment of producing the scored line in order to allow the displacement, for example by translation, of a tool bearing the projection, towards the film.

## Claims

1. A device for producing at least one scored line in at least one plastic material outer layer (12) of a film (10), comprising:
- a bearing surface (21; 53; 73) for the film (10); and
- at least one projection (26a, 26b; 52a, 52b; 72a) for forming the scored line by penetration of the projection into the said plastic material layer (12) when the film (10) is in position against the said bearing surface, the projection (52a, 52b; 72a) causing the plastic material of the said layer (12) to flow along the scored line in order to form a bead (55; 75) on the said layer (12) along at least one side of the scored line
**characterised in that** an asymmetrical cross section of the projection (52a, 52b; 72a) causes:
- either the plastic material of the said layer (12) to flow along the scored line in order to form a bead (55; 75) on the said layer (12) along each side of the scored line, the projection causing more plastic material to be flowed along one side of the scored line than along the other side of the scored line, or
- the formation of a bead (55; 75) on the surface of the said plastic material layer (12) along just one side of the scored line.

2. The device according to Claim 1, in which the projection is arranged on a support (22; 51 a, 51b; 71a, 71b), the scored line being formed by relative travel of the film (10) with respect to the support.

3. The device according to Claim 1 or 2, in which the projection (26a, 26b) is capable of incizing the plastic material layer.

4. The device according to any one of Claims 1 to 3, in which the projection (52a, 52b; 72a) causes the plastic material to flow in cooperation with ultrasound.

5. The device according to Claim 4, comprising:
- an anvil (51a, 51b; 71a, 71b), and
- a sonotrode (50) for applying ultrasound vibrations to the film (10) when the film is compressed between the sonotrode and the anvil,
in which the projection (52a, 52b; 72a) is arranged on said anvil.

6. The device according to Claim 5, in which the bearing surface is arranged on the anvil.

7. The device according to Claim 5 or 6, in which the anvil is a wheel (52a; 52b) mounted so as to rotate, the projection forming a rib (51a, 51b) arranged on the circumference of the wheel, the rib not extending according to the axial direction of the wheel.

8. The device according to Claim 2 and to Claim 5 or 6, in which the projection (72a) has a straight elongate shape in the run direction of the film, the width and/or the height of the projection preferably increasing in the run direction of the film (F).

9. The device according to Claim 8, in which the projection has a cross section with a flat apex (76) parallel to the bearing surface.

10. The device according to any one of Claims 2 to 6, in which the support is a roller (22; 51a, 51b) mounted so as to rotate, the projection (26a, 26b; 52a, 52b) being arranged on the circumference of the roller.

11. The device according to Claim 10, in which the projection (26a, 26b) is arranged on the circumference of a ring (27), the said ring being mounted on the roller (22).

12. The device according to Claim 11, in which there is a clearance between the ring (27) and the roller (22) taken at ambient temperature, a heating element making it possible to clamp the ring on the roller by expansion.

13. The device according to any one of Claims 10-12, in which the bearing surface is defined by the circumference of a second roller (21), the axis of which is parallel to the first roller (22).

14. The device according to Claim 13, in which the first roller (22) has running tracks (28a, 28b) tensioned against the second roller (21).

15. A method for producing at least one scored line in just a first plastic layer (12) of a film (10) comprising at least a second layer (11, 13), the method comprising the production of the scored line in the first layer (12) of the film using a device as defined in any one of Claims 1 to 14.

16. The method according to Claim 15, wherein the film is running with respect to the device for producing the scored line.

17. The method according to Claim 15 or 16, in which the scored line is made after assembling the first (12) and second (11, 13) layers of the film.

18. The method according to Claim 15 or 16, in which the said scored line is made before assembling the first (12) and second (11, 13) layers of the film.

19. A method of manufacturing a flexible packaging (400), which may especially be designed to undergo a preservation treatment, from at least one film having a first plastic material layer (12) and at least a second layer (11, 13), the said second layer forming the outer face of the packaging, which method comprises:
- producing at least one scored line just in the said first layer (12) of the film according to the method defined in any one of Claims 15 to 18, then
- making the packaging from the film provided with said scored line.

20. A film comprising at least one plastic material layer having a scored line, the said plastic material layer forming a bead (55; 75) on its surface along:
- a single side of the scored line, or
- on each side of the scored line, one of the said beads being higher than the other of the said beads or the cross-sectional area of one of the said beads being greater than the cross-sectional area of the other of the said beads.

21. The film according to Claim 20, wherein the said plastic material layer forms a bead on its surface along each side of the scored line, one of the said beads being higher than the other of the said beads, and wherein said one of the said beads is at least 30% higher than the other of the said beads.

22. The film according to Claim 21, wherein said one of the said beads is at least 50% higher than the other of the said beads.

23. The film according to Claim 22, wherein said one of the said beads is at least 100% higher than the other of the said beads.

24. The film according to Claim 23, wherein the said plastic material layer forms a bead on its surface along each side of the scored line, the cross-sectional area of one of the said beads being greater than the cross-sectional area of the other of the said beads, and wherein said cross-sectional area of one of the said beads is at least 30% greater than said cross-sectional area of the other of the said beads.

25. The film according to Claim 24, wherein said cross-sectional area of said one of the said beads is at least 50% greater than said cross-sectional area of the other of the said beads

26. The film according to Claim 25, wherein said cross-sectional area of said one of the said beads is at least 100% greater than said cross-sectional area of the other of the said beads.

27. The film according to any one of claims 20 to 26, wherein said scored line is formed by a groove arranged in the said plastic material layer (12) and wherein said bead along said single side of the scored line or each of said beads along on each side of the scored line is made from material which has plastically flowed out of said groove.

28. A packaging (400), which may especially be designed to undergo a preservation treatment in particular after it has been filled and closed, comprising at least one flexible wall, wherein the said flexible wall is made of a film according to any one of Claims 20 to 27, said scored line being formed by a groove arranged in the said plastic material layer of the film.

29. The packaging according to Claim 28, wherein:
- said plastic material layer of the film has a second scored line formed by a second groove arranged in the said plastic material layer, the said plastic material layer forming a bead (55; 75) on its surface along:
• a single side of the second scored line, or
• on each side of the second scored line, one of the said beads being higher than the other of the said beads or the cross-sectional area of one of the said beads being greater than the cross-sectional area of the other of the said beads,
- the second groove extends at some distance along the first groove, and
- the single bead (55; 75) or the highest bead or the bead having the greatest cross-sectional area of each of the grooves is arranged along the groove on the side away from the other groove.

30. The packaging according to Claim 29, wherein the two scored lines are separated by 2 to 5 millimetres.

31. The packaging according to Claim 29 or 30, wherein the two lines are parallel.

32. The packaging according to any one of Claims 28 to 31, in which each scored line is made in the face of the wall towards the inside of the packaging.

33. The packaging according to any one of Claims 28 to 32, in which the said plastic material layer is made of polypropylene, the wall preferably also comprising a layer made of a light metal such as aluminium.

34. The packaging according to any one of Claims 28 to 33, comprising a second flexible wall, the first and the second wall being joined by their side edges.

35. The packaging according to Claim 34, the first and the second wall comprising welds on the side edges.

36. The packaging according to claim 35, wherein the scored line(s) extend(s) over part of the width of the packaging, being interrupted at the welds on the side edges.

37. The packaging according to claim 34 or 35, wherein the scored line(s) extend(s) over the entire width of the packaging.

38. The packaging according to any one of Claims 34 to 37, said packaging being a flat bag with two walls welded together on the four sides (110, 120, 130, 140) or only on three sides (210, 220, 230) out of four.

39. The packaging according to any one of Claims 34 to 37, said packaging being of the pouch with gusset type.

40. The packaging according to claim 39, comprising:
- three welded sides (310, 320, 330) and a bottom (350) comprising a gusset made by folding, or
- three welded sides (410, 420, 430) and a bottom (450) with a gusset made with two welded parallel edges, or
- two side edges (510, 530) welded so as to produce on each of the edges a gusset.

41. The packaging according to any one of claims 35 to 40, wherein one welded side edge comprises a notch (431) for initiating opening.

42. The packaging according to Claim 40, wherein said notch is located between the two scored lines.

43. The packaging according to Claim 41, wherein the scored lines extend up to the edge of the packaging, thereby surrounding the notch.

44. The packaging according to Claim 41, wherein the scored lines start directly from the notch.

## Patentansprüche

1. Vorrichtung zur Erzeugung von Schnitten als zumindest eine Schwächungslinie in zumindest einer Kunststoffmaterialaußenschicht (12) einer Folie (10), umfassend:
- eine Lagerfläche (21 ; 53 ; 73) für die Folie (10); und
- zumindest einen Vorsprung (26a, 26b ; 52a, 52b ; 72a) zum Ausbilden der Schnitte als Schwächungslinie durch Eindringen des Vorsprungs in die Kunststoffmaterialschicht (12), wenn die Folie (10) in Position an der Lagerfläche ist, wobei der Vorsprung (52a, 52b ; 72a) bewirkt, dass das Kunststoffmaterial der Schicht (12) entlang der Schnitte als Schwächungslinie fließt, um eine Wulst (55 ; 75) auf der Schicht (12) entlang zumindest einer Seite der Schnitte als Schwächungslinie auszubilden,
**dadurch gekennzeichnet, dass** ein asymmetrischer Querschnitt des Vorsprungs (52a, 52b ; 72a) folgendes bewirkt:
- entweder, dass das Kunststoffmaterial (12) entlang der Schnitte als Schwächungslinie zum Ausbilden einer Wulst (55 ; 75) auf der Schicht (12) entlang jeder Seite der Schnitte als Schwächungslinie fließt, wobei der Vorsprung bewirkt, dass mehr Kunststoffmaterial entlang einer Seite der Schnitte als Schwächungslinie als entlang der anderen Seite der Schnitte als Schwächungslinie fließt, oder
- die Ausbildung einer Wulst (55; 75) auf der Oberfläche des Kunststoffmaterials (12) entlang nur einer Seite der Schnitte als Schwächungslinie.

2. Vorrichtung nach Anspruch 1, wobei der Vorsprung auf einer Stütze (22 ; 51a, 51b ; 71a, 71b) angeordnet ist, wobei die Schnitte als Schwächungslinie durch relatives Laufen der Folie (10) bezüglich der Stütze ausgebildet sind.

3. Vorrichtung nach einem der Ansprüche 1 oder 2, wobei der Vorsprung (26a, 26b) zum Einschneiden des Kunststoffmaterials imstande ist.

4. Vorrichtung nach einem der Ansprüche 1 bis 3, wobei der Vorsprung (52a, 52b; 72a) bewirkt, dass das Kunststoffmaterial in Zusammenwirkung mit Ultraschall fließt.

5. Vorrichtung nach Anspruch 4, umfassend:
- einen Amboss (51a, 51b ; 71 a, 71b) und
- eine Sonotrode (50) zum Ausüben von Ultraschallschwingungen auf die Folie (10), wenn die Folie zwischen der Sonotrode und dem Amboss zusammengedrückt ist, wobei der Vorsprung (52a, 52b ; 72a) auf dem Amboss angeordnet ist.

6. Vorrichtung nach Anspruch 5, wobei die Lagerfläche auf dem Amboss angeordnet ist.

7. Vorrichtung nach einem der Ansprüche 5 oder 6, wobei der Amboss ein Rad (52a ; 52b) ist, das drehbar angebracht ist, wobei der Vorsprung eine Rippe (51 a, 51b) ausbildet, die auf dem Umfang des Rads angeordnet ist, wobei die Rippe nicht gemäß der axialen Richtung des Rads verläuft.

8. Vorrichtung nach Anspruch 2 und Anspruch 5 oder 6, wobei der Vorsprung (72a) eine gerade gestreckte Form in der Laufrichtung der Folie aufweist, wobei die Breite und/oder die Höhe des Vorsprungs vorzugsweise in der Laufrichtung der Folie (F) zunimmt.

9. Vorrichtung nach Anspruch 8, wobei der Vorsprung einen Querschnitt mit einem flachen Scheitel (76) parallel zur Lagerfläche aufweist.

10. Vorrichtung nach einem der Ansprüche 2 bis 6, wobei die Stütze eine Rolle (22; 51a, 51b) ist, die drehbar angebracht ist, wobei der Vorsprung (26a, 26b ; 52a, 52b) auf dem Umfang der Rolle angeordnet ist.

11. Vorrichtung nach Anspruch 10, wobei der Vorsprung (26a, 26b) auf dem Umfang eines Rings (27) angebracht ist, wobei der Ring auf der Rolle (22) angebracht ist.

12. Vorrichtung nach Anspruch 11, wobei ein Freiraum zwischen dem Ring (27) und der Rolle (22) auf Umgebungstemperatur vorliegt, wobei es ein Heizelement ermöglicht, den Ring durch Ausdehnung auf die Rolle zu klemmen.

13. Vorrichtung nach einem der Ansprüche 10 bis 12, wobei die Lagerfläche durch den Umfang einer zweiten Rolle (21) definiert ist, deren Achse parallel zur ersten Rolle (22) ist.

14. Vorrichtung nach Anspruch 13, wobei die erste Rolle (22) Laufbahnen (28a, 28b) aufweist, die gegen die zweite Rolle (21) gespannt sind.

15. Verfahren zum Erzeugen von Schnitten als zumindest eine Schwächungslinie in nur einer ersten Kunststoffschicht (12) eines Films (10), der zumindest eine zweite Schicht (11, 13) umfasst, das Verfahren umfassend die Erzeugung der Schnitte als Schwächungslinie in der ersten Schicht (12) der Folie unter Benutzung einer Vorrichtung gemäß einem der Ansprüche 1 bis 14.

16. Verfahren nach Anspruch 15, wobei die Folie zum Erzeugen der Schnitte als Schwächungslinie bezüglich der Vorrichtung läuft.

17. Verfahren nach einem der Ansprüche 15 oder 16, wobei die Schnitte als Schwächungslinie nach dem Zusammensetzen der ersten (12) und zweiten (11, 13) Schichten der Folie hergestellt werden.

18. Verfahren nach einem der Ansprüche 15 oder 16, wobei die Schnitte als Schwächungslinie vor dem Zusammensetzen der ersten (12) und zweiten (11, 13) Schichten der Folie hergestellt werden.

19. Verfahren zum Herstellen einer flexiblen Verpackung (400), die speziell zum Unterziehen einer Konservierungsbehandlung ausgelegt ist, aus zumindest einer Folie mit einer ersten Kunststoffschicht (12) und zumindest einer zweiten Kunststoffschicht (11, 13), wobei die zweite Schicht die Außenseite der Verpackung ausbildet, wobei das Verfahren Folgendes umfasst:
- Erzeugen von Schnitten als zumindest eine Schwächungslinie nur in der ersten Schicht (12) der Folie gemäß dem Verfahren nach einem der Ansprüche 15 bis 18, und
- Herstellen der Verpackung aus der Folie, die mit den Schnitten als Schwächungslinie versehen ist.

20. Folie, umfassend zumindest eine Kunststoffmaterialschicht mit Schnitten als Schwächungslinie, wobei die Kunststoffmaterialschicht eine Wulst (55 ; 75) auf ihrer Oberfläche entlang
- einer einzelnen Seite der Schnitte als Schwächungslinie oder
- auf jeder Seite der Schnitte als Schwächungslinie ausbildet, wobei eine der Wülste höher als die andere der Wülste ist oder eine Querschnittsfläche von einer der Wülste größer als die Querschnittsfläche der anderen der Wülste ist.

21. Folie nach Anspruch 20, wobei die Kunststoffmaterialschicht eine Wulst auf ihrer Oberfläche entlang jeder Seite der Schnitte als Schwächungslinie ausbildet, wobei eine der Wülste höher als die andere der Wülste ist, und wobei eine der Wülste zumindest 30 % höher als die andere der Wülste ist.

22. Folie nach Anspruch 21, wobei die eine der Wülste zumindest 50 % höher als die andere der Wülste ist.

23. Folie nach Anspruch 22, wobei ei eine der Wülste zumindest 100 % höher als die andere der Wülste ist.

24. Folie nach Anspruch 20, wobei die Kunststoffmaterialschicht eine Wulst auf ihrer Oberfläche entlang jeder Seite der Schnitte als Schwächungslinie ausbildet, wobei die Querschnittsfläche von einer der Wülste größer als die Querschnittsfläche der anderen der Wülste ist, und wobei die Querschnittsfläche von einer der Wülste zumindest 30 % größer als die Querschnittsfläche der anderen der Wülste ist.

25. Folie nach Anspruch 24, wobei die Querschnittsfläche von einer der Wülste zumindest 50 % größer als die Querschnittsfläche der anderen der Wülste ist.

26. Folie nach Anspruch 25, wobei die Querschnittsfläche von einer der Wülste zumindest 100 % größer als die Querschnittsfläche der anderen der Wülste ist.

27. Folie nach einem der Ansprüche 20 bis 26, wobei die Schnitte als Schwächungslinie durch eine Nut ausgebildet sind, die in der Kunststoffmaterialschicht (12) angeordnet ist, und wobei die Wulst entlang der einzelnen Seite der Schnitte als Schwächungslinie oder jede der Wülste entlang jeder Seite der Schnitte als Schwächungslinie aus Material hergestellt sind, das plastisch aus der Nut geflossen ist.

28. Verpackung (400), die speziell zum Unterziehen einer Konservierungsbehandlung ausgelegt ist, insbesondere nachdem sie befüllt und verschlossen wurde, umfassend zumindest eine flexible Wand, wobei die flexible Wand aus einer Folie gemäß einem der Ansprüche 20 bis 27 hergestellt ist, wobei die Schnitte als Schwächungslinie durch eine Nut ausgebildet sind, die in der Kunststoffmaterialschicht der Folie angeordnet ist.

29. Verpackung nach Anspruch 28, wobei:
- die Kunststoffmaterialschicht der Folie zweite Schnitte als Schwächungslinie aufweist, die durch eine zweite Nut ausgebildet sind, welche in der Kunststoffmaterialschicht angeordnet ist, wobei die Kunststoffmaterialschicht eine Wulst (55 ; 75) auf ihrer Oberfläche entlang
• entweder einer einzelnen Seite der zweiten Schnitte als Schwächungslinie oder
• auf jeder Seite der Schnitte als Schwächungslinie ausbildet, wobei eine der Wülste höher als die andere der Wülste ist oder eine Querschnittsfläche von einer der Wülste größer als die Querschnittsfläche der anderen der Wülste ist,
- die zweite Nut in einem Abstand entlang der ersten Nut verläuft, und
- die einzelne Wulst (55 ; 74) oder die höchste Wulst oder die Wulst mit der größten Querschnittsfläche von jeder der Wülste entlang der Nut auf der Seite angeordnet ist, die von der anderen Nut weggekehrt ist.

30. Verpackung nach Anspruch 29, wobei die Schnitte als zwei Schwächungslinien um 2 bis 5 Millimeter getrennt sind.

31. Verpackung nach einem der Ansprüche 29 oder 30, wobei die zwei Linien parallel sind.

32. Verpackung nach einem der Ansprüche 28 bis 31, wobei alle Schnitte als Schwächungslinie in der Seitenfläche der Wand hergestellt sind, die der Innenseite der Verpackung zugekehrt ist.

33. Verpackung nach einem der Ansprüche 28 bis 32, wobei die Kunststoffmaterialschicht aus Polypropylen hergestellt ist, wobei die Wand vorzugsweise außerdem eine Schicht umfasst, die aus einem Leichtmetall wie etwa Aluminium hergestellt ist.

34. Verpackung nach einem der Ansprüche 28 bis 33, umfassend eine zweite flexible Wand, wobei die erste und zweite Wand durch ihre Seitenkanten verbunden sind.

35. Verpackung nach Anspruch 34, wobei die erste und zweite Wand Schweißungen an den Seitenkanten umfassen.

36. Verpackung nach Anspruch 35, wobei die Schnitte als Schwächungslinie(n) über einen Teil der Breite der Verpackung verlaufen und an den Schweißungen an den Seitenkanten unterbrochen sind.

37. Verpackung nach einem der Ansprüche 34 oder 35, wobei die Schnitte als Schwächungslinie(n) über die gesamte Breite der Verpackung verlaufen.

38. Verpackung nach einem der Ansprüche 34 bis 37, wobei die Verpackung ein flacher Beutel ist, bei dem zwei Wände auf den vier Seiten (110, 120, 130, 140) oder nur auf drei Seiten (210, 220, 230) der vier zusammengeschweißt sind.

39. Verpackung nach einem der Ansprüche 34 bis 37, wobei die Verpackung von der Art eines Beutels mit Seitenfalte ist.

40. Verpackung nach Anspruch 39, umfassend:
- drei geschweißte Seiten (310, 320, 330) und einen Boden (350), umfassend eine Seitenfalte, die durch Falten hergestellt ist, oder
- drei geschweißte Seiten (410, 420, 430) und einen Boden (450) mit einer Seitenfalte, die mit zwei geschweißten parallelen Kanten hergestellt ist, oder
- zwei Seitenkanten (510, 530), die zum Erzeugen einer Seitenfalte an jeder der Kanten geschweißt sind.

41. Verpackung nach einem der Ansprüche 35 bis 40, wobei eine geschweißte Seitenkante eine Kerbe (431) zum Einleiten des Öffnens umfasst.

42. Verpackung nach Anspruch 40, wobei sich die Kerbe zwischen den Schnitten als zwei Schwächungslinien befindet.

43. Verpackung nach Anspruch 41, wobei die Schnitte als Schwächungslinien hinauf zur Kante der Verpackung verlaufen, wodurch sie die Kerbe umgeben.

44. Verpackung nach Anspruch 41, wobei die Schnitte als Schwächungslinien direkt ab der Kerbe beginnen.

## Revendications

1. Dispositif pour réaliser au moins une ligne de prédécoupe dans au moins une couche externe en matière plastique (12) d'un film (10), comprenant :
- une surface d'appui (21 ; 53 ; 73) pour le film (10) ; et
- au moins une saillie (26a, 26b ; 52a, 52b ; 72a) pour former la ligne de prédécoupe par pénétration de la saillie dans ladite couche en matière plastique (12) lorsque le film (10) est en position contre ladite surface d'appui, la saillie (52a, 52b ; 72a) amenant la matière plastique de ladite couche (12) à fluer le long de la ligne de prédécoupe afin de former un bourrelet (55 ; 75) sur ladite couche (12) le long d'au moins un côté de la ligne de prédécoupe
**caractérisé en ce qu'**une section transversale asymétrique de la saillie (52a, 52b ; 72a) provoque:
- soit le fluage de la matière plastique de ladite couche (12) le long de la ligne de prédécoupe afin de former un bourrelet (55 ; 75) sur ladite couche (12) le long de chaque côté de la ligne de prédécoupe, la saillie provoquant un fluage de matériau plastique plus important le long d'un côté de la ligne de prédécoupe que le long de l'autre côté de la ligne de prédécoupe,
- soit la formation d'un bourrelet (55 ; 75) sur la surface de ladite couche de matière plastique (12) le long d'un seul côté de la ligne de prédécoupe.

2. Dispositif selon la revendication 1, dans lequel la saillie est agencée sur un support (22 ; 51a, 51b ; 71a, 71b), la ligne de prédécoupe étant formée par défilement relatif du film (10) par rapport au support.

3. Dispositif selon la revendication 1 ou 2, dans lequel la saillie (26a, 26b) est apte à inciser la couche en matière plastique.

4. Dispositif selon l'une quelconque des revendications 1 à 3, dans lequel la saillie (52a, 52b ; 72a) provoque le fluage de la matière plastique en coopération avec des ultrasons.

5. Dispositif selon la revendication 4, comprenant:
- une enclume (51a, 51b ; 71a, 71b), et
- une sonotrode (50) pour appliquer des vibrations ultrasonores au film (10) lorsque le film est comprimé entre la sonotrode et l'enclume,
dans lequel la saillie (52a, 52b ; 72a) est disposée sur ladite enclume.

6. Dispositif selon la revendication 5, dans lequel la surface d'appui est disposée sur l'enclume.

7. Dispositif selon la revendication 5 ou 6, dans lequel l'enclume est une roue (52a ; 52b) montée de manière à tourner, la saillie formant une nervure (51a, 51b) agencée sur la circonférence de la roue, la nervure ne s'étendant pas selon la direction axiale de la roue.

8. Dispositif selon la revendication 2 et la revendication 5 ou 6, dans lequel la saillie (72a) a une forme allongée rectiligne dans la direction de défilement du film, la largeur et/ou la hauteur de la saillie augmentant suivant la direction de défilement du film (F).

9. Dispositif selon la revendication 8, dans lequel la saillie a une section transversale avec un sommet plat (76) parallèle à la surface d'appui.

10. Dispositif selon l'une quelconque des revendications 2 à 6, dans lequel le support est un rouleau (22 ; 51a, 51b) monté en rotation, la saillie (26a, 26b ; 52a, 52b) étant agencée sur la circonférence du rouleau.

11. Dispositif selon la revendication 10, dans lequel la saillie (26a, 26b) est agencée sur la circonférence d'une bague (27), ladite bague étant montée sur le rouleau (22).

12. Dispositif selon la revendication 11, dans lequel un jeu existe entre la bague (27) et le rouleau (22) pris à température ambiante, un élément de chauffage permettant de serrer la bague sur le rouleau par dilatation.

13. Dispositif selon l'une quelconque des revendications 10 à 12, dans lequel la surface d'appui est définie par la circonférence d'un deuxième rouleau (21) dont l'axe est parallèle au premier rouleau (22).

14. Dispositif selon la revendication 13, dans lequel le premier rouleau (22) présente des chemins de roulements (28a, 28b) sollicités contre le deuxième rouleau (21).

15. Procédé pour réaliser au moins une ligne de prédécoupe uniquement dans une première couche en matière plastique (12) d'un film (10) comprenant au moins une deuxième couche (11, 13), le procédé comprenant la réalisation de la ligne de prédécoupe dans la première couche (12) du film à l'aide d'un dispositif tel que défini dans l'une quelconque des revendications 1 à 14.

16. Procédé selon la revendication 15, dans lequel le film défile par rapport au dispositif pour la réalisation de la ligne de prédécoupe.

17. Procédé selon la revendication 15 ou 16, dans lequel la ligne de prédécoupe est réalisée après assemblage des première (12) et deuxième couches (11, 13) du film.

18. Procédé selon la revendication 15 ou 16, dans lequel la ligne de prédécoupe est réalisée avant assemblage des première (12) et deuxième couches (11, 13) du film.

19. Procédé de fabrication d'un emballage souple (400), pouvant notamment être destiné à subir un traitement de conservation, à partir d'au moins un film présentant une première couche en matière plastique (12) et au moins une deuxième couche (11, 13), ladite deuxième couche formant la face externe de l'emballage, le procédé comprenant :
- la réalisation d'au moins une ligne de prédécoupe dans uniquement ladite première couche (12) du film selon le procédé défini dans l'une quelconque des revendications 15 à 18, puis
- la confection de l'emballage à partir du film muni de ladite ligne de prédécoupe.

20. Film comprenant au moins une couche en matière plastique présentant une ligne de prédécoupe, ladite couche en matière plastique formant un bourrelet (55 ; 75) sur sa surface le long :
- d'un seul côté de la ligne de prédécoupe, ou
- de chaque côté de la ligne de prédécoupe, un desdits bourrelets étant plus haut que l'autre desdits bourrelets ou la surface en coupe transversale de l'un desdits bourrelets étant supérieure à la surface en coupe transversale de l'autre desdits bourrelets.

21. Film selon la revendication 20, dans lequel ladite couche de matière plastique forme un bourrelet sur sa surface le long de chaque côté de la ligne de prédécoupe, un desdits bourrelets étant plus haut que l'autre desdits bourrelets, et dans lequel ledit un desdits bourrelets est au moins 30% plus haut que l'autre desdits bourrelets.

22. Film selon la revendication 21, dans lequel ledit un desdits bourrelets est d'au moins 50% plus haut que l'autre desdits bourrelets.

23. Film selon la revendication 22, dans lequel ledit un desdits bourrelets est au moins 100% plus haut que l'autre desdits bourrelets.

24. Le film selon la revendication 20, dans lequel ladite couche de matière plastique forme un bourrelet sur sa surface le long de chaque côté de la ligne de prédécoupe, la surface en coupe transversale de l'un desdits bourrelets étant supérieure à la surface en coupe transversale de l'autre desdits bourrelets, et dans lequel ladite surface en coupe transversale de l'un desdits bourrelets est au moins 30% plus importante que ladite surface en coupe transversale de l'autre desdits bourrelets.

25. Le film selon la revendication 24, dans lequel ladite surface en coupe transversale dudit un desdits bourrelets est d'au moins 50% plus importante que ladite surface en coupe transversale de l'autre desdits bourrelets.

26. Le film selon la revendication 25, dans lequel ladite surface en coupe transversale dudit un desdits bourrelets est au moins 100% plus importante que ladite surface en coupe transversale de l'autre desdits bourrelets.

27. Le film selon l'une quelconque des revendications 20 à 26, dans lequel ladite ligne de prédécoupe est formée par un sillon agencé dans ladite couche de matière plastique (12) et dans lequel ledit bourrelet le long dudit seul côté de la ligne de prédécoupe ou chacun desdits bourrelets le long de chaque côté de la ligne de prédécoupe est réalisé par fluage de matière hors dudit sillon.

28. Un emballage (400), qui peut notamment être conçu pour subir un traitement de conservation, en particulier après qu'il a été rempli et fermé, comprenant au moins une paroi flexible, dans lequel ladite paroi flexible est faite d'un film selon l'une quelconque des revendications 20 à 27, ladite ligne de prédécoupe étant formée par un sillon disposé dans ladite couche de matière plastique du film.

29. L'emballage selon la revendication 28, dans lequel:
- ladite couche de matière plastique de la feuille présente une seconde ligne de prédécoupe formée d'un deuxième sillon ménagé dans ladite couche de matière plastique, ladite couche de matière plastique formant un bourrelet (55 ; 75) sur sa surface le long de :
• un seul côté de la deuxième ligne de prédécoupe, ou
• de chaque côté de la deuxième ligne de prédécoupe, un desdits bourrelets étant plus haut que l'autre desdits bourrelets ou la surface en coupe transversale de l'un desdits bourrelets étant supérieure à la surface en coupe transversale de l'autre desdits bourrelets,
- le deuxième sillon s'étend à une certaine distance le long du premier sillon, et
- le bourrelet unique (55 ; 75) ou le bourrelet le plus haut ou ayant la plus importante surface en coupe transversale de chacun des sillons est disposé le long du sillon sur le côté opposé de l'autre sillon.

30. L'emballage selon la revendication 29, dans lequel les deux lignes de prédécoupe sont séparées par 2 à 5 millimètres.

31. L'emballage selon la revendication 29 ou 30, dans lequel les deux lignes sont parallèles.

32. L'emballage selon l'une quelconque des revendications 28 à 31, dans lequel chaque ligne de prédécoupe est réalisée dans la face de la paroi vers l'intérieur de l'emballage.

33. L'emballage selon l'une quelconque des revendications 28 à 32, dans lequel ladite couche de matière plastique est en polypropylène, la paroi comprenant en outre de préférence une couche constituée d'un métal léger tel que l'aluminium.

34. L'emballage selon l'une quelconque des revendications 28 à 33, comprenant une deuxième paroi flexible, la première et la seconde paroi étant reliées par leurs bords latéraux.

35. L'emballage selon la revendication 34, la première et la deuxième parois comprenant des soudures sur les bords latéraux.

36. L'emballage selon la revendication 35, dans lequel la ou les ligne(s) de prédécoupe s'étend(ent) sur une partie de la largeur de l'emballage, en étant interrompue au niveau des soudures sur les bords latéraux.

37. L'emballage selon la revendication 34 ou 35, dans lequel la ou les ligne(s) de prédécoupe s'étend(ent) sur toute la largeur de l'emballage.

38. L'emballage selon l'une quelconque des revendications 34 à 37, ledit emballage étant un sachet plat avec deux parois soudées entre elles sur les quatre côtés (110, 120, 130, 140) ou seulement sur trois côtés (210, 220, 230) sur quatre.

39. L'emballage selon l'une quelconque des revendications 34 à 37, ledit emballage étant du type poche avec soufflet.

40. L'emballage selon la revendication 39, comprenant:
- trois côtés soudés (310, 320, 330) et un fond (350) comprenant un soufflet réalisé par pliage, ou
- trois côtés soudés (410, 420, 430) et un fond (450) avec un soufflet fabriqué avec deux bords parallèles soudés, ou
- deux bords latéraux (510, 530) soudés de manière à produire sur chacun des bords un soufflet.

41. L'emballage selon l'une quelconque des revendications 35 à 40, dans lequel un bord latéral soudé comporte une encoche (431) pour déclencher l'ouverture.

42. L'emballage selon la revendication 40, dans lequel ladite encoche est située entre les deux lignes de prédécoupe.

43. L'emballage selon la revendication 41, dans lequel les lignes de prédécoupe s'étendent jusqu'au bord de l'emballage, entourant ainsi l'encoche.

44. L'emballage selon la revendication 41, dans lequel les lignes de prédécoupe partent directement à partir de l'encoche.
